(19) Europäisches Patentamt
European Patent Office
Office européen des brevets

(11) **EP 4 769 043 A1**

(12) **EUROPÄISCHE PATENTANMELDUNG**

(43) Veröffentlichungstag:
**01.07.2026 Patentblatt 2026/27**

(21) Anmeldenummer: **25212138.9**

(22) Anmeldetag: **29.10.2025**

(51) Internationale Patentklassifikation (IPC):
**G05B 19/418** (2006.01)  **B65B 57/20** (2006.01)
**B67C 3/00** (2006.01)

(52) Gemeinsame Patentklassifikation (CPC):
**G05B 19/4188; B67C 3/007;** B65B 57/00;
B67C 2003/227; G05B 2219/31103;
G05B 2219/31104; G05B 2219/31106;
G05B 2219/45009; G05B 2219/45048

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **30.12.2024 DE 102024139924**

(71) Anmelder: **Krones AG**
**93073 Neutraubling (DE)**

(72) Erfinder:
• **Meyer, Andreas**
**93073 Neutraubling (DE)**

• **Boettcher, Benedikt**
**93073 Neutraubling (DE)**
• **Aust, Robert**
**93073 Neutraubling (DE)**
• **Senn, Konrad**
**93073 Neutraubling (DE)**
• **Stubenhofer, Markus**
**93073 Neutraubling (DE)**
• **Peter, Daniel**
**93073 Neutraubling (DE)**

(74) Vertreter: **Schuhbießer, Irmgard Gertrud**
**Schuhbießer-Patent**
**Holzgartenstraße 6**
**93059 Regensburg (DE)**

(54) **BEHÄLTERBEHANDLUNGSLINIE UND BEHÄLTERBEHANDLUNGSVERFAHREN ZUM BEHANDELN VON BEHÄLTERN IN EINER BEHÄLTERBEHANDLUNGSLINIE**

(57) Es sind eine Behälterbehandlungslinie und ein Behälterbehandlungsverfahren zum Behandeln von Behältern in einer Behälterbehandlungslinie bereitgestellt. Die Behälterbehandlungslinie hat mindestens zwei Behälterbehandlungseinrichtungen, die mindestens eine erste Behälterbehandlungseinrichtung zur Behandlung von Behältern und eine zweite Behälterbehandlungseinrichtung zur Behandlung der Behälter aufweisen, und die ausgestaltet sind, miteinander Daten in Bezug auf die Behandlung der Behälter auszutauschen, mindestens eine Bestimmungseinrichtung zum Bestimmen eines Ist-Zustands mindestens eines vorbestimmten Elements, das für ein Behandeln der Behälter mit mindestens einer der mindestens zwei Behälterbehandlungseinrichtungen vorgesehen ist, eine Vergleichseinrichtung zum Vergleich des von der Bestimmungseinrichtung bestimmten Ist-Zustands mit einem in einer ersten Datenbank gespeicherten vorbestimmten Zustand, der ein Mess- und/oder Regelzustand in Bezug auf den Betrieb einer externen Behälterbehandlungslinie ist, welche mindestens eine Behälterbehandlungseinrichtung aufweist, die zumindest teilweise baugleich zu einer der mindestens zwei Behälterbehandlungseinrichtungen ist, und eine Abstimmeinrichtung zur Abstimmung mindestens einer Einstellung zur Behandlung der Behälter, die in der ersten Behälterbehandlungseinrichtung vorzunehmen ist, mit mindestens einer Einstellung zur Behandlung der Behälter, die mit der zweiten Behälterbehandlungseinrichtung vorzunehmen ist, wobei die Abstimmeinrichtung ausgestaltet ist, ihre Abstimmung auf der Grundlage des Vergleichsergebnisses der Ver- gleichseinrichtung auszuführen.

EP 4 769 043 A1

**FIG. 1**

**Beschreibung**

Die Erfindung bezieht sich auf eine Behälterbehandlungslinie und ein Behälterbehandlungsverfahren zum Behandeln von Behältern in einer Behälterbehandlungslinie.

Behälter zur Aufnahme von Lebensmitteln oder eines Getränks oder von Reinigungsmitteln oder Kosmetika sind beispielsweise Glasbehälter oder Behälter aus Pulpe oder Kunststoffbehälter. Die Behälter sind insbesondere als Flaschen oder Dosen ausgestaltet.

Glasbehälter werden in einer Behälterbehandlungslinie in der Regel mit einem Füllgut, insbesondere einem Lebensmittel oder Getränk usw. wie zuvor genannt, befüllt und für den Handel fertig ausgeliefert.

Ausgangsmaterial für Behälter aus Pulpe ist ein faserbasiertes Material, das biologisch abbaubar sein kann. Die Pulpe ist ein Gemenge aus Fasermaterial und Flüssigkeit, das Fasern und/oder größere Partikel enthalten kann. Meist hat die Pulpe eine breiige Konsistenz. Beispielsweise ist Pappmaché eine Pulpe. Zur Herstellung von Behältern wird der Pulpe in der Behälterbehandlungslinie Wasser entzogen.

Kunststoffbehälter werden mit einer Behälterbehandlungslinie aus Vorformlingen (Preform) aus Kunststoff hergestellt. Eine Behälterbehandlungslinie hierfür umfasst eine Heizeinrichtung und beispielsweise eine Blasmaschine. Die Vorformlinge werden nach Erwärmung in der Heizeinrichtung in einer Blasform der Blasmaschine durch Einblasen eines gasförmigen Mediums in die Form des gewünschten fertigen Behälters gebracht. Bei Streckblasmaschinen werden die Behälter zudem mit einer Reckstange gereckt. Je nach Gegebenheit umfasst die Behälterbehandlungslinie auch eine Herstellungseinrichtung für Vorformlinge (Preformen), insbesondere eine Spritzgussmaschine oder eine Formpressmaschine (Compression Moulding Machine) zur Herstellung der Vorformlinge (Preform).

Unabhängig von dem Behältermaterial ist in der Behälterbehandlungslinie zudem meist mindestens eine Transporteinrichtung zum Transport der Behälter vorgesehen. Insbesondere ist in einer Linie für Kunststoffbehälter eine Transporteinrichtung in der Heizeinrichtung, zu der Blasmaschine und aus der Blasmaschine an mindestens eine nachgeordnete Behälterbehandlungseinrichtung vorhanden.

Die mindestens eine nachgeordnete Behälterbehandlungseinrichtung kann, unabhängig von dem Behältermaterial, mindestens eine der folgenden Behälterbehandlungseinrichtungen sein oder umfassen, nämlich eine Transporteinrichtung, eine Inspektionseinrichtung zur Inspektion der Vorformlinge oder der Behälter, eine Ausstattungseinrichtung zur Ausstattung der Behälter mit mindestens einem Etikett und/oder einer Bedruckung, eine Fülleinrichtung oder Füllmaschine zum Füllen der Behälter mit einem Füllgut, insbesondere einem flüssigen oder rieselfähigem Lebensmittel usw., eine Reinigungseinrichtung, eine Verpackungseinrichtung, oder eine sonstige Behälterbehandlungseinrichtung

EP 352 633 B1 zeigt ein Verfahren zur Blasformung von Behältern, bei welchem im Anschluss an eine Blasformung eines Behälters auf mindestens einem Höhenniveau des Behälters ein Istwert einer Wanddicke gemessen wird und eine Regelung eine Größe mindestens eines den Blasprozess beeinflussenden Parameters in Abhängigkeit von einer Differenz zwischen einem Sollwert und dem gemessenen Istwert für die Wanddicke vorgibt.

WO 2022/238032 A1 zeigt eine Etikettiermaschine und ein Verfahren zum Konfigurieren einer Etikettiermaschine, bei denen Konfigurationsparameter mittels einem Künstliche-Intelligenz-Modul erstellt werden. Die erstellten Konfigurationsparameter werden genutzt, um damit eine Vielzahl von Modulen der Etikettiermaschine zu konfigurieren. Die Vielzahl von Modulen dient wenigstens zum Etikettieren und/oder Bedrucken von Behältern.

Für einen reibungslosen Ablauf der Behandlung(en) der Behälter in einander nachgeschalteten Behälterbehandlungseinrichtungen der Behälterbehandlungslinie sind eine Vielzahl von Einstellungen vorzunehmen, um fehlerfrei hergestellte/gefüllte/verpackte Behälter ohne ungewünschte Stillstände der Behälterbehandlungslinie gewährleisten zu können. Dabei ist die Abstimmung der Einstellungen essentiell, wie die Einstellung eines Bauteils der Linie und/oder die Einstellung eines Behandlungsmediums. Die Einstellung eines Bauteils ist beispielsweise die Höhe und/oder Temperatur und/oder die Strahlungsrichtung eines Heizstrahlers und/oder die Transportgeschwindigkeit eines Drehsterns einer Transporteinrichtung usw. Die Einstellung eines Behandlungsmediums ist beispielsweise die Temperatur und/oder Zusammensetzung eines Behandlungsmediums, wie einer Reinigungsflüssigkeit, oder einer Kühlflüssigkeit, oder anderer Medien. Da die Behälterbehandlungslinie einen Durchsatz von etwa 40.000 Behälter pro Stunde oder mehr haben kann, sind die Einstellungen der Linie für einen reibungslosen Betrieb in der Regel sehr präzise vorzunehmen. Dadurch sind die Einstellungen zeitlich sehr aufwändig und zudem im Betrieb oft ständig zu überwachen und bei Bedarf in Bezug auf die jeweils vorherrschenden Betriebsverhältnisse nachzujustieren.

Daher besteht die Aufgabe der vorliegenden Erfindung darin, eine

Behälterbehandlungslinie und ein Behälterbehandlungsverfahren zum Behandeln von Behältern in einer Behälterbehandlungslinie bereitzustellen, welche die zuvor genannten Probleme lösen. Insbesondere sollen eine Behälterbehandlungslinie und ein Behälterbehandlungsverfahren zum Behandeln von Behältern in einer Behälterbehandlungslinie bereitgestellt werden, welche unaufwändig in Bezug auf Zeit, Herstellkosten und Betriebskosten Behälter mit hoher Qualität herstellen können, so dass der Ausschuss gering ist.

Die zuvor genannte Aufgabe wird durch eine Behälterbehandlungslinie nach Anspruch 1 gelöst. Die Behälterbehandlungslinie hat mindestens zwei Behälterbehandlungseinrichtungen, die mindestens eine erste Behälterbehandlungseinrichtung zur Behandlung von Behältern und eine zweite Behälterbehandlungseinrichtung zur Behandlung der Behälter aufweisen, und die ausgestaltet sind, miteinander Daten in Bezug auf die Behandlung der Behälter auszutauschen, mindestens eine Bestimmungseinrichtung zum Bestimmen eines Ist-Zustands mindestens eines vorbestimmten Elements, das für ein Behandeln der Behälter mit mindestens einer der mindestens zwei Behälterbehandlungseinrichtungen vorgesehen ist, eine Vergleichseinrichtung zum Vergleich des von der Bestimmungseinrichtung bestimmten Ist-Zustands mit einem in einer ersten Datenbank gespeicherten vorbestimmten Zustand, der ein Mess- und/oder Regelzustand in Bezug auf den Betrieb einer externen Behälterbehandlungslinie ist, welche mindestens eine Behälterbehandlungseinrichtung aufweist, die zumindest teilweise baugleich zu einer der mindestens zwei Behälterbehandlungseinrichtungen ist, und eine Abstimmeinrichtung zur Abstimmung mindestens einer Einstellung zur Behandlung der Behälter, die in der ersten Behälterbehandlungseinrichtung vorzunehmen ist, mit mindestens einer Einstellung zur Behandlung der Behälter, die mit der zweiten Behälterbehandlungseinrichtung vorzunehmen ist, wobei die Abstimmeinrichtung ausgestaltet ist, ihre Abstimmung auf der Grundlage des Vergleichsergebnisses der Vergleichseinrichtung auszuführen.

Die beschriebene Behälterbehandlungslinie ist derart ausgestaltet, dass eine Einstellung der einzelnen Teile und Medien, die für die Behandlung der Behälter in der Linie zu verwenden sind, mit geringerem Aufwand als bisher möglich ist. Die Einstellung kann hierbei die Inbetriebnahme und/oder den laufenden Betrieb der Linie umfassen.

Im Ergebnis ist auch der Ausschuss von Vorformlingen und/oder fertiggestellten Behältern minimierbar, der seinen Grund in einer fehlerhaften Einstellung der Behälterbehandlungseinrichtungen und/oder deren Elemente hat.

Insgesamt können die Behälterbehandlungseinrichtungen und/oder deren Elemente sehr vorteilhaft in Bezug auf Zeit, Herstellkosten und Betriebskosten eingerichtet werden. Dadurch trägt die Ausgestaltung der Behälterbehandlungslinie wesentlich dazu bei, dass die Behälter gleichförmig wiederholbar und somit mit hoher Qualität behandelbar sind.

Vorteilhafte weitere Ausgestaltungen der Behälterbehandlungslinie sind in den abhängigen Ansprüchen angegeben.

Möglicherweise führt die Abstimmeinrichtung bei ihrer Abstimmung mindestens eine Konfiguration der ersten Behälterbehandlungseinrichtung und/oder der zweiten Behälterbehandlungseinrichtung aus, um die Behälterbehandlungslinie zur Behandlung der Behälter einzustellen.

Denkbar ist, dass die Abstimmeinrichtung auf der Grundlage des Vergleichsergebnisses der Vergleichseinrichtung und/oder des Abgleichergebnisses einer Abgleicheinrichtung zur Selbstkonfiguration der mindestens zwei Behälterbehandlungseinrichtungen ausgestaltet ist.

In einer Ausgestaltung ist der erste vorbestimmte Zustand eine Anomalie und/oder Fehler, die und/oder der im Betrieb der externen Behälterbehandlungslinie aufgetreten ist.

Möglicherweise ist der erste vorbestimmte Zustand ein Einbauzustand und/oder Einrichtzustand, der bei der Inbetriebnahme der externen Behälterbehandlungslinie aufgetreten ist.

Möglicherweise ist der erste vorbestimmte Zustand eine Konfiguration, die zum Betrieb der externen Behälterbehandlungslinie vorgenommen wurde.

Optional ist die Bestimmungseinrichtung mindestens ein Sensor und/oder mindestens eine Datenauswerteeinheit zum Bestimmen des Ist-Zustands des mindestens einen vorbestimmten Elements.

In einer Ausgestaltung ist die mindestens eine Baueigenschaft des vorbestimmten Elements der Bauzeitpunkt oder Baujahr des vorbestimmten Elements und/oder der mindestens zwei Behälterbehandlungseinrichtungen.

Der in der ersten Datenbank gespeicherte vorbestimmte Zustand kann ein als Fehler eingestufter Zustand des vorbestimmten Elements sein, wobei die Abstimmeinrichtung ausgestaltet ist, eine Handlungsempfehlung zu erzeugen und auszugeben, die auf der Grundlage des Vergleichsergebnisses der Vergleichseinrichtung basiert.

Möglicherweise hat die Behälterbehandlungslinie zudem eine Anzeigeeinrichtung zur Anzeige mindestens einer Ausgabe der Bestimmungseinrichtung und/oder der Vergleichseinrichtung und/oder der Abstimmeinrichtung.

Die Behälterbehandlungslinie kann zudem eine Kopplungseinrichtung zur Kopplung der Behandlung der Behälter mit der ersten Behälterbehandlungseinrichtung und der Behandlung der Behälter mit der zweiten Behälterbehandlungseinrichtung auf der Grundlage von Daten haben, die in der ersten Datenbank gespeichert sind.

Die Kopplungseinrichtung kann ausgestaltet sein, mindestens einen Parameter zur Behandlung von Behältern, der in der zweiten Behälterbehandlungseinrichtung bei der Behandlung der Behälter zu verwenden ist, an mindestens einen Parameter zur Behandlung von Behältern anzupassen, der in der ersten Behälterbehandlungseinrichtung bei der Behandlung der Behälter eingestellt ist.

Optional ist die Bestimmungseinrichtung ausgestaltet ist, als den Ist-Zustand des mindestens einen vorbestimmten Elements eine Einstellung des vorbestimmten Elements der ersten Behälterbehandlungseinrichtung oder der zweiten Behälterbehandlungseinrichtung zu bestimmen. Hierbei kann die Einstellung des vorbestimmten Elements der ersten Behälterbehandlungseinrichtung oder der zweiten Behälterbehandlungseinrichtung mindestens eine der folgenden Einstellungen umfassen, nämlich eine Montagehöhe des vorbestimmten Elements, eine Zusammensetzung eines flüssigen oder gasförmigen Mediums, eine Temperatur eines Elements oder eines flüssigen oder gasförmigen Mediums, eine Belichtungszeit, ein Drehmoment des vorbestimmten Elements.

Denkbar ist, dass die mindestens zwei Behälterbehandlungseinrichtungen mindestens eine Blasmaschine aufweisen, die zum Blasformen der Behälter aus jeweils einem Vorformling ausgestaltet ist.

Die zuvor beschriebene Behälterbehandlungsvorrichtung kann zudem mindestens ein Heizelement zur Abstrahlung von Heizstrahlung zum Heizen von Vorformlingen aufweisen.

Die mindestens zwei Behälterbehandlungseinrichtungen können mindestens eine Transporteinrichtung zum Transport der Behälter in der Behälterbehandlungslinie aufweisen.

Die mindestens eine Transporteinrichtung kann zum Transport der Behälter relativ zu mindestens einer der ersten Behälterbehandlungseinrichtung und/oder der zweiten Behälterbehandlungseinrichtung ausgestaltet sein.

Die zuvor genannte Aufgabe wird ferner durch ein Behälterbehandlungsverfahren, das zum Behandeln von Behältern in einer Behälterbehandlungslinie ausgestaltet ist, nach Anspruch 19 gelöst, die mindestens zwei Behälterbehandlungseinrichtungen aufweist, die mindestens eine erste Behälterbehandlungseinrichtung zur Behandlung von Behältern und eine zweite Behälterbehandlungseinrichtung zur Behandlung der Behälter aufweisen, und die ausgestaltet sind, miteinander Daten in Bezug auf die Behandlung der Behälter auszutauschen. Das Behälterbehandlungsverfahren hat die Schritte: Bestimmen, mit mindestens einer Bestimmungseinrichtung, eines Ist-Zustands mindestens eines vorbestimmten Elements, das für ein Behandeln der Behälter mit mindestens einer der mindestens zwei Behälterbehandlungseinrichtungen vorgesehen ist, Vergleichen, mit einer Vergleichseinrichtung, des von der Bestimmungseinrichtung bestimmten Ist-Zustands mit einem in einer ersten Datenbank gespeicherten vorbestimmten Zustand, der ein Mess- und/oder Regelzustand in Bezug auf den Betrieb einer externen Behälterbehandlungslinie ist, welche mindestens eine Behälterbehandlungseinrichtung aufweist, die zumindest teilweise baugleich zu einer der mindestens zwei Behälterbehandlungseinrichtungen ist, und Abstimmen, mit einer Abstimmeinrichtung, mindestens einer Einstellung zur Behandlung der Behälter, die in der ersten Behälterbehandlungseinrichtung vorzunehmen ist, mit mindestens einer Einstellung zur Behandlung der Behälter, die mit der zweiten Behälterbehandlungseinrichtung vorzunehmen ist, wobei die Abstimmeinrichtung ihre Abstimmung auf der Grundlage des Vergleichsergebnisses der Vergleichseinrichtung ausführt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung.

Nachfolgend ist die Erfindung unter Bezugnahme auf die beiliegende Zeichnung und anhand von Ausführungsbeispielen näher beschrieben. Es zeigen:

Fig. 1 ein Blockschaltbild eines Systems gemäß einem ersten Ausführungsbeispiel, das mit Behälterbehandlungslinien und Datenbanken aufweist; und

Fig. 2 ein Blockschaltbild einer Behälterbehandlungslinie gemäß dem ersten Ausführungsbeispiel.

**In** den Figuren sind gleiche oder funktionsgleiche Elemente, sofern nichts anderes angegeben ist, mit denselben Bezugszeichen versehen.

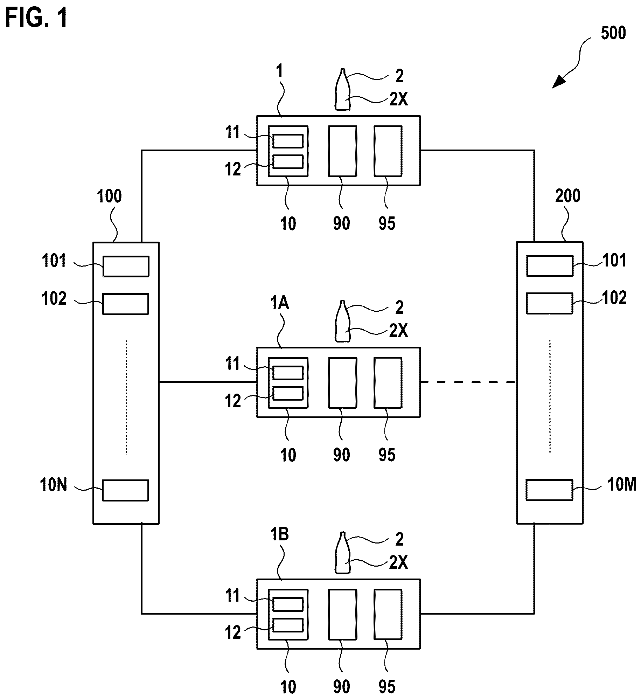

Fig. 1 zeigt ein System 500 mit Behälterbehandlungslinien 1, 1A, 1B, die jeweils zur Behandlung von Behältern 2 ausgestaltet sind. Die Behälter 2 sind optional mit einem Produkt 2X befüllbar. Die Behälter 2 können Glasbehälter oder Behälter aus Pulpe oder Kunststoffbehälter sein, wie zuvor für den Stand der Technik beschrieben. Die Behälter 2 sind insbesondere als Flaschen, wie in Fig. 1 gezeigt, oder als Dosen ausgestaltet. Das Produkt 2X ist beispielsweise ein Lebensmittel oder ein Getränk oder ein Reinigungsmittel oder ein Kosmetikprodukt.

Wie in Fig. 1 gezeigt, können die Behälterbehandlungslinien 1, 1A, 1B auf mindestens eine Datenbank 100, 200 zugreifen. Der Zugriff kann über eine drahtgebundene oder nichtdrahtgebundene Kommunikationsleitung erfolgen. Die Kommunikationsleitung kann mit dem Internet verbinden. Bei dem speziellen Beispiel von Fig. 1 sind zwei Datenbanken 100, 200 vorhanden, jedoch kann nur eine Datenbank 100 oder 200 oder können mehr als zwei Datenbanken vorhanden sein.

Die Behälterbehandlungslinien 1, 1A, 1B sind jeweils extern voneinander angeordnet. Beispielsweise ist die Behälterbehandlungslinie 1 an einem ersten Ort angeordnet und die Behälterbehandlungslinie 1A ist an einem zweiten Ort angeordnet. Der zweite Ort kann insbesondere in einer anderen Stadt und/oder Land/Staat als der erste Ort liegen.

Die Behälterbehandlungslinien 1, 1A, 1B von Fig. 1 haben jeweils mindestens ein Steuergerät 10, eine Abstimmeinrichtung 90 und eine Bestimmungseinrichtung 95. Das Steuergerät 10 weist eine Vergleichseinrichtung 11 und optional eine Abgleicheinrichtung 12 auf. Die Bestimmungseinrichtung 95 weist beispielsweise eine Datenauswerteeinheit und/oder mindestens einen Sensor und/oder mindestens eine Kamera auf.

Die Bestimmungseinrichtung 95 überprüft, welcher Maschinentyp verbaut ist. Hierzu verwendet die Bestimmungseinrichtung 95 insbesondere Informationen, wie beispielsweise Stücklisten und/oder ein Typenschild, der jeweiligen Behälterbehandlungslinie 1, 1A, 1B. Die Informationen können in mindestens einer der Datenbanken 100, 200 gespeichert sein.

Die Datenauswerteeinheit kann Informationen, wie beispielsweise Stücklisten und/oder ein Typenschild, der jeweiligen Behälterbehandlungslinie 1, 1A, 1B auswerten. Die Datenauswerteeinrichtung kann eine Software sein. Die Bestimmungseinrichtung 95 benötigt nicht unbedingt einen Sensor, der nachfolgend als eine Option beschrieben ist.

Der Sensor kann beispielsweise eine physische oder physikalische oder chemische Eigenschaft erfassen. Die physische Eigenschaft ist insbesondere eine Höhe oder Form usw. Die physikalische Eigenschaft ist insbesondere eine Temperatur oder Druck usw. Die chemische Eigenschaft ist insbesondere eine Zusammensetzung eines Mediums. Das Medium ist beispielsweise eine Kühlflüssigkeit oder ein in die Behälter 2 zu füllendes Produkt 2X. Die Kamera kann beispielsweise einen Einbauort von mindestens einem Element der Behälterbehandlungslinien 1, 1A, 1B aufnehmen und darstellen.

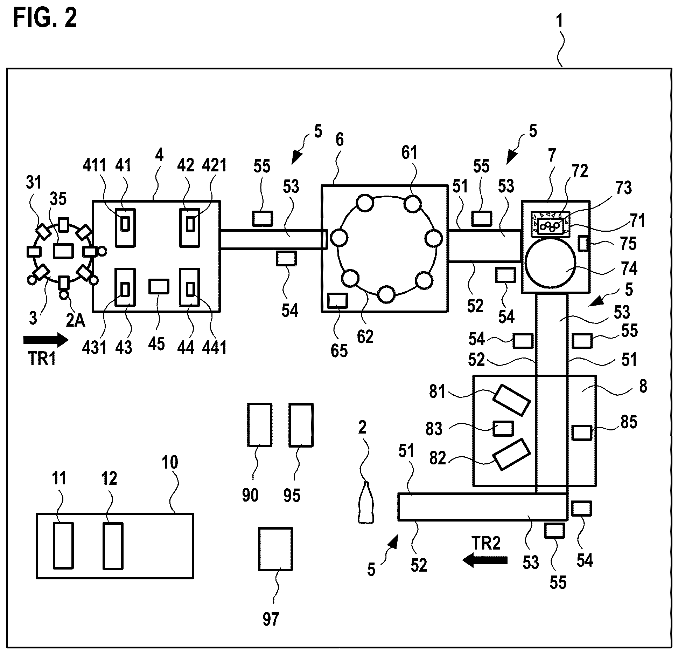

Die Behälterbehandlungslinien 1, 1A, 1B können jeweils unterschiedlich viele Behälterbehandlungseinrichtungen aufweisen. Zudem ist es möglich, dass die Behälterbehandlungslinien 1, 1A, 1B unterschiedliche Behälterbehandlungseinrichtungen aufweisen. Möglicherweise haben nur zwei der Behälterbehandlungslinien 1, 1A, 1B eine Behälterbehandlungseinrichtung, die in beiden Linien 1, 1A, 1B gleich aufgebaut ist. Insbesondere sind die Behälterbehandlungslinien 1, 1A, 1B zumindest teilweise baugleich. Die Behälterbehandlungslinie 1 ist in Fig. 2 genauer gezeigt und nachfolgend noch genauer beschrieben.

Die erste Datenbank 100 kann eine zentrale Datenbank des Herstellers der Behälterbehandlungslinien 1, 1A, 1B sein, in welcher Mess- und/oder Regelungsdaten gespeichert und/oder speicherbar sind. In der Datenbank 100 sind bei dem Beispiel von Fig. 1 Daten 101, 102, ... 10N gespeichert. N ist eine beliebige natürliche Zahl größer 1. Die Daten 101 sind oder umfassen ein/en Mess- und/oder Regelzustand der Behälterbehandlungslinie 1A. Die Daten 102 sind oder umfassen ein/en Mess- und/oder Regelzustand der Behälterbehandlungslinie 1B. Zudem sind entsprechende Daten der Behälterbehandlungslinie 1 in der ersten Datenbank 100 gespeichert und/oder speicherbar.

Die Vergleichseinrichtung 11 des Steuergeräts 10 kann die Daten 101 und/oder die Daten 102 mit mindestens einem Ist-Zustand vergleichen, der von einer Bestimmungseinrichtung 35, 45, 55, 65, 75, 85 der Behälterbehandlungslinie 1 gemäß Fig. 2 bestimmt wird. Der Ist-Zustand entspricht beispielsweise einem Ist-Zustand der Behälterbehandlungslinie 1 bei deren Konfiguration. Gemäß einem anderen Beispiel entspricht der Ist-Zustand einem Ist-Zustand der Behälterbehandlungslinie 1 bei deren Betrieb. Insbesondere ist der Ist-Zustand ein verdreckter Heizstrahler usw.

Die zweite Datenbank 200 kann eine zentrale Datenbank des Herstellers der Behälterbehandlungslinien 1, 1A, 1B sein, in welcher Baueigenschaften in Bezug auf die Behälterbehandlungslinien 1, 1A, 1B gespeichert und/oder speicherbar sind. In der Datenbank 200 sind bei dem Beispiel von Fig. 1 Daten 201, 202, ... 20M gespeichert. M ist eine beliebige natürliche Zahl größer 1. Die Daten 201 umfassen mindestens eine Baueigenschaft eines vorbestimmten Elements 31, 411, 51, 61, 74, 81 der Behälterbehandlungslinie 1A und/oder mindestens eine Baueigenschaft von zwei Behälterbehandlungseinrichtungen 3, 4, 5, 6, 7, 8 der Behälterbehandlungslinie 1, die in Fig. 2 genauer gezeigt sind. Die Daten 202 sind mindestens eine Baueigenschaft eines vorbestimmten Elements 31, 411, 51, 61, 74, 81 der Behälterbehandlungslinie 1B und/oder mindestens eine Baueigenschaft von zwei Behälterbehandlungseinrichtungen 3, 4, 5, 6, 7, 8 der Behälterbehandlungslinie 1B. Zudem sind entsprechende Daten der Behälterbehandlungslinie 1 in der zweiten Datenbank 200 gespeichert und/oder speicherbar.

Die optionale Abgleicheinrichtung 12 des Steuergeräts 10 kann die Daten 201 und/oder die Daten 202 mit mindestens einer Baueigenschaft eines vorbestimmten Elements 31, 411, 51, 61, 74, 81 der Behälterbehandlungslinie 1 abgleichen. Dies ist nachfolgend anhand von Fig. 2 genauer beschrieben.

Fig. 2 zeigt ein Beispiel für eine Behälterbehandlungslinie 1. Die Behälterbehandlungslinie 1A von Fig. 1 und/oder die Behälterbehandlungslinie 1B von Fig. 2 können zumindest teilweise baugleich aufgebaut sein wie die Behälterbehandlungslinie 1 von Fig. 2.

Fig. 2 zeigt eine Behälterbehandlungslinie 1 zur Herstellung von Behältern 2 aus Vorformlingen 2A aus Kunststoff, wie Polyethylenterephthalat (PET), Polypropylen (PP) usw. Die Vorformling 2A sind ebenfalls Behälter bzw. eine Vorform der Behälter 2 oder noch unfertige Behälter 2. Die fertigen Behälter 2 können beispielsweise Flaschen sein, wie in Fig. 2 dargestellt, in die ein Produkt eingefüllt werden kann. Das Produkt kann insbesondere ein Getränk, ein Reinigungsmittel, ein Kosmetikprodukt, usw. sein. Die Vorformlinge 2A sind in Fig. 1 als Kreise für ihre Mündung dargestellt. Der Übersichtlichkeit halber ist in Fig. 1 nur einer der Vorformlinge 2A, am Anfang (in Fig. 2 links) der von ihnen gebildeten Reihe, mit einem Bezugszeichen versehen.

Bei dem Beispiel von Fig. 2 hat die Behälterbehandlungslinie 1 als Behälterbehandlungseinrichtungen 3, 4, 5, 6, 7, 8 eine Transporteinrichtung 3, ein Heizeinrichtung 4, mehrere Transporteinrichtungen 5, eine Blasmaschine 6, eine Füllmaschine 7 und eine Ausstattungsmaschine 8. Die Transporteinrichtungen 5 transportieren die Behälter 2 jeweils zwischen den Behälterbehandlungseinrichtungen 4, 6, 7, 8 und aus der Behälterbehandlungseinrichtung (Ausstattungsmaschine) 8 heraus. Die Vorformlinge 2A werden in einer ersten Transportrichtung TR1 in die Behälterbehandlungslinie 1 transportiert. Die Behälter 2 werden in einer zweiten Transportrichtung TR2 aus der Behälterbehandlungslinie 1 transportiert.

Selbstverständlich ist in der Behälterbehandlungslinie 1 insbesondere mindestens eine zusätzliche Behälterbehandlungseinrichtung vorhanden und einsetzbar. Insbesondere kann in der Behälterbehandlungslinie 1 beispielsweise zusätzlich eine Verpackungseinrichtung und/oder mindestens eine Inspektionseinrichtung vorhanden sein. Die Behälterbehandlungslinie 1 ist nicht auf die spezielle Ausgestaltung und/oder Anordnung von Fig. 2 beschränkt.

Die Daten 101, 102, ... 10N der Datenbank 100 und/oder die Daten 101, 102, ... 10N der Datenbank 200 und/oder Ausgaben mindestens einer der Bestimmungseinrichtungen 35, 45, 55, 65, 75, 85 und/oder der Vergleichseinrichtung 11 und/oder der Abgleicheinrichtung 12 und/oder der Abstimmeinrichtung 90 sind mit einer Anzeigeeinrichtung 97 anzeigbar.

Die Transporteinrichtung 3 von Fig. 1 ist ein Drehstern, der Vorformlinge 2A in die Heizeinrichtung 4 transportiert. Die Transporteinrichtung 3 hat zudem Elemente, nämlich Greifer 31 und eine Bestimmungseinrichtung 35. Die Greifer 31 sind zum Greifen der Vorformlinge 2A ausgestaltet. Die Bestimmungseinrichtung 35 ist zur Bestimmung der Position und/oder der Transportgeschwindigkeit der Vorformlinge 2A ausgestaltet. Die Bestimmungseinrichtung 35 hat mindestens einen Sensor zur Bestimmung der Position und/oder der Transportgeschwindigkeit der Vorformlinge 2A.

Gemäß einem speziellen Beispiel sind an der Transporteinrichtung 3 von Fig. 1 eine Vielzahl von Modulen wenigstens zum Erzeugen und/oder Trocknen von Behältern (Pulpe) angeordnet. Die Vielzahl von Modulen kann insbesondere eine Maschine zur Erzeugung einer Pulpe-Flasche bilden, wobei bei der Pulpe-Erzeugung eines der zwei folgenden Herstellungsverfahren möglich ist, nämlich die "nasse" sowie die "trockene" Herstellungsweise. Hierbei können Betriebsdaten wenigstens CAD-Daten/Scans zu produktionsrelevanten Behälterinformationen umfassen. Bei Pulpe können solche Behälterinformationen die Wassermenge (beim nassen Verfahren) sein, der benötigte Druck, Trocknungs-Bedingungen, Angaben zur Qualität des Edukts (Pulpe-Edukt). Zudem können und sonstige relevante Parameter und/oder Steuerungsparameter umfasst sein.

Bei der Transporteinrichtung 3 von Fig. 1 kann die Bestimmungseinrichtung 35 eine Steuereinheit sein oder umfassen, welche insbesondere wenigstens eine der folgenden Einstellungen automatisch vornimmt:

- ◦Relevante Parameter/Module/Regelgrößen der Module an der Transporteinrichtung 3
- ◦ Angaben zu Trocknungsparametern, zu dem benötigten Druck, usw. wie zuvor angegeben
- ◦Wassergehalt der Vorformlinge 2A und/oder Behälter 2
- ◦ eine Anmeldung und Synchronisierung einer Aggregatsteuerung mit einer Maschinenhauptsteuerung
- ◦ eine Synchronisierung innerhalb der Linie 1.

Hierfür ist die Bestimmungseinrichtung 35 ausgestaltet zum Empfangen von Eingabedaten, die eine Angabe von Parametern betreffen, die für die Erzeugung von Vorformlingen 2A oder Behälter und/oder deren Umformungsprozess/-Härteprozesses benötigt werden und/oder sonstige Maschinen-relevante Parameter und/oder Steuerungsparameter/-prozesse sind, wobei die Eingabedaten Parameter-Datensätze von konfigurierten Maschinen und Operationsdaten umfassen.

Die Bestimmungseinrichtung 35 und/oder die Abstimmeinrichtung 90 sind/ist ausgestaltet zum Erstellen von Konfigurationsparametern für die Transporteinrichtung 3 bzw. der daran angeordneten Module mittels der Vergleichseinrichtung 12, die ein Künstliche-Intelligenz-Modul (KI- /Al-Modul) sein kann, wobei die Konfigurationsparameter auf wenigstens den empfangenen Eingabedaten basieren.

Zudem sind/ist die Bestimmungseinrichtung 35 und/oder die Abstimmeinrichtung 90 ausgestaltet, die Konfigurationsparameter anzuwenden, um eine Vielzahl von Modulen der Transporteinrichtung 3 und/oder der daran angeordneten Module zu konfigurieren, wobei die Vielzahl von Modulen wenigstens zum Erzeugen und/oder Umformen und/oder Aushärten und/oder Transportieren von Vorformlingen und/oder Behältern 2 ausgelegt sind.

Das Anwenden der Konfigurationsparameter kann mit einer Kopplungseinrichtung erfolgen, die mindestens einen Parameter zur Behandlung von Behältern 2, 2A, der in der zweiten Behälterbehandlungseinrichtung 4 bei der Behandlung der Behälter 2, 2A zu verwenden ist, an mindestens einen Parameter zur Behandlung von Behältern 2, 2A anzupassen, der in der ersten Behälterbehandlungseinrichtung 3 bei der Behandlung der Behälter 2, 2A eingestellt ist.

Dadurch ist es möglich, dass sich die Transporteinrichtung 3 bzw. das daran angeordnete mindestens eine Modul selbstkonfiguriert, beispielsweise auf der Grundlage von folgenden Daten.

A) Ein Kunde 1 hat einen Pulpe-Behälter x im Einsatz → dadurch hat sich das optimale Parameter-Set M ergeben (Wassergehalt 20%, ...).

B) Ein Kunde 2 hat eine neue IBN: Pulpe-Edukt y ist der Spezifikation des Edukts (für Behälter x) von Kunde 1 sehr ähnlich. Aufgrund der minimalen Abweichung muss der Gehalt, aufgrund von Wissen (KnowHow) aus dem Entwicklungsprozess, um 1% erhöht werden. Dies stellt eine Selbstkonfiguration dar, was möglich ist durch den Einsatz der Bestimmungseinrichtung 35 und/oder der Abstimmeinrichtung 90, die einen Datenbank/BigData-Abgleich durchführen. Die Maschine bei Kunde 2 hat gelernt, dass die 1% mehr Wasser nicht ausreichen, sondern 2% Wassergehalt mehr benötigt wird.

C) Somit ergibt sich ein Vorteil bei Kunde 3, der ebenfalls ein Pulpe-Edukt analog Pulpe-Behälter y hat. Bei Kunde 3 wird daher, aufgrund des Einsatzes der Bestimmungseinrichtung 35 und/oder der Abstimmeinrichtung 90, der Wassergehalt um 2% erhöht. In anderen Worten, der Wassergehalt wird von dem an der Transporteinrichtung 3 angeordneten mindestens einem Modul, insbesondere automatisch, um 2% erhöht.

In der Heizeinrichtung 4 werden die Vorformlinge 2A mit Hilfe von Heizmodulen 41, 42, 43, 44, genauer deren Elementen, nämlich Heizstrahler 411, 421, 431, 441, auf eine gewünschte Umformtemperatur geheizt. Jedes der Heizmodule 41, 42, 43, 44 hat mindestens einen Heizstrahler 411, 421, 431, 441. Die Heizeinrichtung 4 hat zudem als weiteres Element eine Bestimmungseinrichtung 45 zur Bestimmung der Temperatur der Heizstrahler 411, 421, 431, 441 und/oder der Temperatur zwischen den Heizmodulen 41, 42, 43, 44 und/oder der Position und/oder der Transportgeschwindigkeit der Vorformlinge 2A relativ zu den n Heizmodulen 41, 42, 43, 44. Die Bestimmungseinrichtung 45 hat mindestens einen Sensor zur Bestimmung der Temperatur und/oder der Position und/oder der Transportgeschwindigkeit.

Die Transporteinrichtung 5 von Fig. 1 ist ein Linearförderer, der als Elemente ein optionales erstes Geländer 51, ein optionales zweites Geländer 52, ein Aufnahmeelement 53 zur Aufnahme der Vorformlinge 2A oder der Behälter 2, mindestens einen Antrieb 54, und eine Bestimmungseinrichtung 55 aufweist. Die Bestimmungseinrichtung 55 ist zur Bestimmung der Position und/oder der Transportgeschwindigkeit der Vorformlinge 2A oder Behälter 2 ausgestaltet. Die Bestimmungseinrichtung 55 hat insbesondere mindestens einen Sensor zur Bestimmung der Position der Vorformlinge 2A und/oder eines der optionalen Geländer 51, 52, insbesondere relativ zu einem der anderen Elemente der Transporteinrichtung 5, und/oder zur Bestimmung der Transportgeschwindigkeit der Vorformlinge 2A, insbesondere relativ zu einem der anderen Elemente der Transporteinrichtung 5.

Bei der Transporteinrichtung 5 von Fig. 1 kann die Bestimmungseinrichtung 55 eine Steuereinheit sein oder umfassen, welche insbesondere wenigstens eine der folgenden Einstellungen automatisch vornimmt:

- Relevante Parameter/Module/Regelgrößen der Transporteinrichtung 5
- Angaben zu Transportparametern, wie Position und/oder der Transportgeschwindigkeit der Vorformlinge 2A oder Behälter 2
- Angaben zu eingesetzten Betriebsmitteln (Operating Supplies (OS), insbesondere Bandschmierung (Nassbandschmierung, Trockenbandschmierung, Hybrid, Feststoff-Anteil, Silikon-haltig, ...)
- eine Anmeldung und Synchronisierung einer Aggregatsteuerung mit einer Maschinenhauptsteuerung
- eine Synchronisierung innerhalb der Linie 1.

Hierfür ist die Bestimmungseinrichtung 55 ausgestaltet zum Empfangen von Eingabedaten, die eine Angabe von für die Transporteinrichtung 5 relevanter Parameter und/oder von Steuerungsparameter/-prozesse benötigt werden und/oder sonstige Maschinen-relevante Parameter sind, wobei die Eingabedaten Parameter-Datensätze von bereits konfigurierten Maschinen und Operationsdaten umfassen. Für die Transporteinrichtung 5 von Fig. 1 können die Parameter wenigstens ein Transportparameter sein. Ist/Hat die Transporteinrichtung 5 von Fig. 1 keine Trockenlaufkette, können die Parameter beispielsweise wenigstens ein Bandschmierparameter sein.

Die Bestimmungseinrichtung 55 und/oder die Abstimmeinrichtung 90 sind/ist ausgestaltet zum Erstellen von Konfigurationsparametern für die Transporteinrichtung 5 mittels der Vergleichseinrichtung 12, die ein Künstliche-Intelligenz-Modul (KI- /AI-Modul) sein kann, wobei die Konfigurationsparameter auf wenigstens den empfangenen Eingabedaten basieren.

Zudem sind/ist die Bestimmungseinrichtung 55 und/oder die Abstimmeinrichtung 90 ausgestaltet, die Konfigurationsparameter anzuwenden, um eine Vielzahl von Modulen der Transporteinrichtung 5 zu konfigurieren, wobei die Vielzahl von Modulen wenigstens zum Transportieren von Behältern von Behältern 2 ausgelegt sind.

Dadurch ist es möglich, dass sich die Transporteinrichtung 5 selbstkonfiguriert, beispielsweise auf der Grundlage von folgenden Daten.

A) Ein Kunde 1 hat eine Flasche a mit einem Kippwinkel x und Größe/Material/Form p. Hierbei läuft die Trockenbandschmierung der Transporteinrichtung 5 mit den Taktzeiten t1 und den Bandschmierkonzentrationen des KIC-OS CG1 n%.

B) Ein Kunde 2 hat eine fast analoge Flasche, bei der sich nur der Kippwinkel unterscheidet, nämlich als Kippwinkel = y. Aufgrund des Datenbankabgleichs wird die Konzentration von KIC-OS CG1 auf (n+1)% erhöht.

Somit lernt die Transporteinrichtung 5 von Kunde 2, dass n% gepasst hätten - allerdings vom silikonhaltigen KIC-OS CG2.

C) Ein Kunde 3 hat eine analoge Flasche zu Kunde 2. Aufgrund der Daten von Kunde 1 und Kunde 2 ergibt sich mit der Bestimmungseinrichtung 55 und/oder der Abstimmeinrichtung 90, dass bei Kunde 3 direkt KIC-OS CG2 mit n% eingesetzt wird.

Die Blasmaschine 6 hat als Behälterbehandlungselement(e) mindestens eine Blasform 61, einen Drehstern 62 und eine Bestimmungseinrichtung 65. In der Blasform 61 werden die vorgewärmten Vorformlinge 2A in den Behälter 2 mit der gewünschten Form geblasen. Der Drehstern 62 bewegt die mindestens eine Blasform 61 zwischen den zwei benachbarten Transporteinrichtungen 5 am Einlauf und Auslauf der Blasmaschine 6. Die Bestimmungseinrichtung 65 hat mindestens einen Sensor zur Bestimmung des Drucks in mindestens einer der Blasformen 61 und/oder der Position einer der Blasformen 61, insbesondere relativ zu einer der Transporteinrichtungen 5, und/oder des Öffnungsmaßes von einer der Blasformen 61.

Die Blasmaschine 6 hat eine Vielzahl von Modulen wenigstens zum Erzeugen und/oder Streckblasen von Behältern 2, die aus Kunststoff oder Pulpe hergestellt sind.

Die Bestimmungseinrichtung 65 kann eine Steuereinheit sein oder umfassen, welche insbesondere wenigstens eine der folgenden Einstellungen automatisch vornimmt:

  ∘ Relevante Parameter/Module/Regelgrößen der mindestens eine Blasform 61, insbesondere Angaben zu Blasparameter, wie Blasdruck usw.
  ∘ Auswahl der Streckblasparameter
  ∘ Ofen-Leistung
  ∘

## Kontrolle der Verschmutzung + angepasste Reinigung

  ∘ eine Anmeldung und Synchronisierung einer Aggregatsteuerung mit einer Maschinenhauptsteuerung
  ∘ eine Synchronisierung innerhalb der Linie 1.

Hierfür ist die Bestimmungseinrichtung 65 ausgestaltet zum Empfangen von Eingabedaten, die eine Angabe von Parametern betreffen, die für die Erzeugung von Behältern 2 aus Vorformlingen 2A und/oder deren Umformungsprozess benötigt werden, insbesondere die z.B. wenigstens einen Streckblasprozess und/oder Umformungsprozess/Härteprozesses betreffen, und/oder sonstige Maschinen-relevante Parameter und/oder Steuerungsparameter/-prozesse sind, wobei die Eingabedaten Parameter-Datensätze von konfigurierten Blasmaschinen und deren Betriebsdaten (Operationsdaten) umfassen.

Die Bestimmungseinrichtung 65 und/oder die Abstimmeinrichtung 90 sind/ist ausgestaltet zum Erstellen von Konfigurationsparametern für die Blasmaschine 6 mittels der Vergleichseinrichtung 12, die ein Künstliche-Intelligenz-Modul (KI- /AI-Modul) sein kann, wobei die Konfigurationsparameter auf wenigstens den empfangenen Eingabedaten basieren.

Zudem sind/ist die Bestimmungseinrichtung 65 und/oder die Abstimmeinrichtung 90 ausgestaltet, die Konfigurationsparameter anzuwenden, um die Blasmaschine 6 bzw. deren Blasformen 61 zu konfigurieren, wobei die Blasmaschine 6 bzw. deren Blasformen 61 wenigstens zum Blasen und/oder Aushärten von Behältern 2 ausgelegt sind.

Dadurch ist es möglich, dass sich die Blasmaschine 6 auf der Grundlage von Daten selbstkonfiguriert, welche bereits in einer der Datenbanken 100, 200 gespeichert sind.

Die Füllmaschine 7 hat als Behälterbehandlungselement mindestens einen Füllbehälter 71, mindestens ein Kühlmedium 72, mindestens ein Füllmedium oder Produkt 73, mindestens einen Füller 74 zum Abfüllen des mindestens einen Füllmediums oder Produkts 73 in einen Behälter 2 und eine Bestimmungseinrichtung 75. Die Bestimmungseinrichtung 75 hat mindestens einen Sensor zur Bestimmung der Temperatur des mindestens einen Kühlmediums 72 und/oder zur Bestimmung der Temperatur des mindestens einen Füllmediums oder Produkts 73 und/oder zur Bestimmung der Zusammensetzung des mindestens einen Kühlmediums 72 und/oder zur Bestimmung der Zusammensetzung des mindestens einen Füllmediums oder Produkts 73 und/oder zur Bestimmung des von dem Füller 74 ausgeübten Fülldrucks.

Die Bestimmungseinrichtung 75 kann eine Steuereinheit sein oder umfassen, welche eine dezidierte/spezifische Wareneingangskontrolle durchführt, um eine Kontrolle der Spezifikation der Betriebsmittel (OS) eines Kühlturms für das Kühlmedium 72 und eine Regelung und/oder Steuerung anhand der Spezifikationen vornimmt. Beispielsweise sind eine Vielzahl von Modulen für wenigstens eine Anwendung vorhanden, welche einen Kühlturm erfordern. Die Bestimmungseinrichtung 75 kann ausgestaltet sein, insbesondere wenigstens eine der folgenden Einstellungen automatisch vorzunehmen:

  ∘ Relevante Parameter/Module/Regelgrößen der Maschine
  ∘ Kühlturmfunktionen, beispielsweise inklusive Temperaturprofil
  ∘ Desinfektionskonzept
  ∘ Mikrobiologische Belastung
  ∘ Versteinung

◦ eine Anmeldung und Synchronisierung einer Aggregatsteuerung mit einer Maschinenhauptsteuerung

◦ eine Synchronisierung innerhalb der Linie 1.

Hierfür ist die Bestimmungseinrichtung 75 ausgestaltet zum Empfangen von Eingabedaten, die eine Angabe von Parametern betreffen, die wenigstens einen Kühlturmprozess/-schritt und/oder ein Temperaturprofil betreffen, wobei die Eingabedaten Parameter-Datensätze von konfigurierten Maschinen und Betriebsdaten (Operationsdaten) umfassen.

Die Bestimmungseinrichtung 75 und/oder die Abstimmeinrichtung 90 sind/ist ausgestaltet zum Erstellen von Konfigurationsparametern für den Kühlturm der Füllmaschine 7 mittels der Vergleichseinrichtung 12, die ein Künstliche-Intelligenz-Modul (KI- /AI-Modul) sein kann, wobei die Konfigurationsparameter auf wenigstens den empfangenen Eingabedaten basieren.

Zudem sind/ist die Bestimmungseinrichtung 75 und/oder die Abstimmeinrichtung 90 ausgestaltet, die Konfigurationsparameter anzuwenden, um die Füllmaschine 7 bzw. deren Kühlturm, insbesondere eine Vielzahl von Modulen der Maschine 7 zu konfigurieren, wobei die Vielzahl von Modulen wenigstens zum Kühlen [Kühlturmfunktion] und/oder Thermischen Behandeln von Behältern 2 ausgelegt sind.

Dadurch ist es möglich, dass sich die Füllmaschine 7 bzw. deren Module für den Kühlturm auf der Grundlage von Daten selbstkonfiguriert, welche bereits in einer der Datenbanken 100, 200 gespeichert sind. Beispielsweise findet eine Selbstkonfiguration aufgrund der folgenden Daten statt:

A) Ein Kunde 1 hat eine Linie a, bei welcher sich das optimale Parameter-Set M ergeben hat, nämlich Kühlturm-Programm inkl. Temperaturprofil, Steinverhütung, Desinfektionskonzept/-konzentrationen, ... - hier konkret: in der Regel ist eine Desinfektionskonzentration von 20 ppm erforderlich.

B) Der Kunde 1 nimmt eine neue Linie in Betrieb, nämlich Linie b. Die Linie b unterscheidet sich nur minimal von der Linie a. Aufgrund der bisherigen Datenbank-Werte führt diese Abweichung in der Regel zu einem Desinfektionsbedarf an 22 ppm des Desinfektionsmittels. Dies ist möglich durch einen Datenbank/BigData-Abgleich, so dass sich die Linie b selbstkonfiguriert.

C) Die Linie b bei Kunde 1 hat gelernt, dass die 22 ppm nicht ausreichen, sondern stattdessen 24 ppm gebraucht werden

D) Der Vorteil bei Kunde 2, der ebenfalls eine Linie mehr oder weniger analog zu Linie b hat, liegt darin, dass bei Kunde 2 von vorne herein 24 ppm an Desinfektionsmittel dosiert wird.

Die beschriebene Selbstkonfiguration des Kühlturms bzw. der Füllmaschine 7 hat den großen Vorteil, dass keine mikrobiologische Belastung entsteht. Grund dafür ist, dass ohne die entsprechende Mindest-Desinfektion eine mikrobiologische Belastung entsteht, die unerwünschten Ausschuss und Anlagenstillstände produziert.

Die Ausstattungsmaschine 8 hat als Behälterbehandlungselement mindestens ein Ausstattungsaggregat 81, 82, mindestens ein Ausstattungsmedium 83, und eine Bestimmungseinrichtung 85. Das Ausstattungsaggregat 81, 82 ist ein Etikettier- und/oder Druckaggregat, das einen Behälter 2 mit mindestens einem Etikett und/oder einem Druck auf dem Behälter und/oder dem Etikett ausstatten kann. Das mindestens eine Ausstattungsmedium 83 kann ein Etikett und/oder eine Druckfarbe und/oder Leim umfassen. Die Bestimmungseinrichtung 85 hat mindestens einen Sensor zur Bestimmung der Position eines der Behälter 2 relativ zu mindestens einem Etikettier- und/oder Druckaggregat 81, 82 und/oder zur Bestimmung der Position des mindestens ein Ausstattungsmediums 83 und/oder zur Bestimmung der Zusammensetzung des mindestens ein Ausstattungsmediums 83.

Bei der Ausstattungsmaschine 8 Fig. 1 kann die Bestimmungseinrichtung 85 eine Steuereinheit sein oder umfassen, welche insbesondere wenigstens eine der folgenden Einstellungen automatisch vornimmt:

◦ Relevante Parameter/Module/Regelgrößen der Ausstattungsmaschine 8, die insbesondere eine Maschine für, insbesondere digitalen, Direktdruck ist

◦ Angaben zu Druckparametern

◦ Angaben zu eingesetzten Betriebsmitteln (Operating Supplies (OS), insbesondere Art, Konzentration, Farbe usw.

◦ eine Anmeldung und Synchronisierung einer Aggregatsteuerung mit einer Maschinenhauptsteuerung

◦ eine Synchronisierung innerhalb der Linie 1.

Hierfür ist die Bestimmungseinrichtung 85 ausgestaltet zum Empfangen von Eingabedaten, die insbesondere wenigstens einen Druckparameter und/oder Aushärteparameter und/oder sonstige Maschinen-relevante Parameter und/oder Steuerungsparameter/-prozesse aufweisen, wobei die Eingabedaten Parameter-Datensätze von bereits konfigurierten Maschinen und Operationsdaten umfassen.

Die Bestimmungseinrichtung 85 und/oder die Abstimmeinrichtung 90 sind/ist ausgestaltet zum Erstellen von Konfigurationsparametern für die Ausstattungsmaschine 8 mittels der Vergleichseinrichtung 12, die ein Künstliche-Intelligenz-Modul (KI- /AI-Modul) sein kann, wobei die Konfigurationsparameter auf wenigstens den empfangenen Eingabedaten basieren.

Zudem sind/ist die Bestimmungseinrichtung 85 und/oder die Abstimmeinrichtung 90 ausgestaltet, die Konfigurationsparameter anzuwenden, um die Module der Ausstattungsmaschine 8 zu konfigurieren, wobei die Module der Ausstattungsmaschine 8 wenigstens zum Bedrucken von Behältern 2 ausgelegt sind.

Dadurch ist es möglich, dass sich die Ausstattungsmaschine 8 selbstkonfiguriert, beispielsweise auf der Grundlage von folgenden Daten.

A) Ein Kunde 1 hat einen Behälter, insbesondere Flasche, X, auf dem ein Druckbild a zu erzeugen ist. Daraus ergeben sich die Druck- und Aushärteparameter M

B) Ein Kunde 2 hat einen Behälter, insbesondere Flasche, Y, auf dem ein Druckbild b zu erzeugen ist, dass dem Druckbild a bei Kunde 1 stark ähnelt. Daher werden die gleichen Tinten verwendet und es werden die Druck- und Aushärteparameter M geladen.

Die Maschine bei Kunde 2 lernt, dass die Druck- und Aushärteparameter M aufgrund der Behälterspezifikation von Y angepasst werden müssen, da hier beim Kunden der größere Einflussfaktor liegt. Daraus ergibt sich beim Kunde 2 ein Parameterset N.

C) Ein Kunde 3 hat ebenfalls den Behälter, insbesondere Flasche, Y, auf dem ein Druckbild c zu erzeugen ist. Dementsprechend wird direkt das Parameterset N geladen und minimal auf das Druckbild c des Kunden 3 angepasst.

Wie bereits zuvor für das Beispiel von Fig. 2 für einige der Maschinen 6 bis 8 und die Transporteinrichtung 3 und die daran möglicherweise angeordneten Module sowie die Transporteinrichtungen 5 beschrieben, ist bei den Linien 1, 1A, 1B Folgendes möglich. Die Vergleichseinrichtung 11 führt einen Vergleich mit Daten in der Datenbank 100 aus. Zudem kann die optionale Abgleicheinrichtung 90 einen Abgleich mindestens einer Baueigenschaft von beispielsweise dem Heizmodul 411 der Behälterbehandlungslinie 1 mit mindestens einer vorbestimmten Baueigenschaft des Heizmoduls 411 der Behälterbehandlungslinie 1A und/oder mindestens einen vorbestimmten Baueigenschaft der mindestens zwei Behälterbehandlungseinrichtungen 4, 6 ausführen, die in der Datenbank 200 gespeichert sind/ist.

Bei den Linien 1, 1A, 1B ist somit das Erstellen von Konfigurationsdaten möglich. Hierbei sind folgende Schritte umfasst:

∘ Erstellen eines Parametrisierungsmodells basierend auf den empfangenen Eingabedaten; und

∘ Trainieren, mittels einem Künstliche-Intelligenz-Modul (KI-Modul), des Parametrisierungsmodells basierend auf den Parameter-Datensätzen von konfigurierten Maschinen, wobei Konfigurationsparameter aus dem trainierten Parametrisierungsmodell abgeleitet werden.

Das Erstellen von Konfigurationsdaten ermöglicht eine Selbstkonfiguration anhand von Datenbank-Wissen, insbesondere Daten in mindestens einer der Datenbanken 100, 200. Das Datenbank-Wissen kann übergreifend sein und umfasst Maschinen-KnowHow des Maschinenherstellers von Forschung über Inbetriebnahme der Maschine oder Linie 1, 1A, 1B bis Anwendung beim Endkunden. Außerdem kann sämtliches KnowHow in Bezug auf Betriebsmittel (Operating Supplies) und/oder Verhalten Maschine/Verfahren/Betriebsmittel in mindestens einer der Datenbanken 100, 200 gespeichert sein.

Somit ermöglicht dieses Datenbank-Wissen, insbesondere Daten in mindestens einer der Datenbanken 100, 200, neben der Selbstkonfiguration, auch die Reaktion auf Anomalien während des laufenden Prozesses. Dies ist ein wesentlicher Beitrag zur Betriebssicherheit.

Zudem bildet dieses Datenbank-Wissen einen elementaren Grundbaustein für dezidierte/spezifische Wareneingangskontrolle. Insbesondere ist eine Kontrolle der Spezifikation der Betriebsmittel und eine Regelung und/oder Steuerung anhand der Spezifikationen möglich.

Noch dazu kann das Anwenden der Konfigurationsparameter mit einer Kopplungseinrichtung erfolgen, die mindestens einen Parameter zur Behandlung von Behältern 2, 2A, der in der zweiten Behälterbehandlungseinrichtung bei der Behandlung der Behälter 2, 2A zu verwenden ist, an mindestens einen Parameter zur Behandlung von Behältern 2, 2A anzupassen, der in der ersten Behälterbehandlungseinrichtung bei der Behandlung der Behälter 2, 2A eingestellt ist, wie zuvor als Beispiel für die Behälterbehandlungseinrichtungen 3, 4 genannt.

Gemäß einem zweiten Ausführungsbeispiel ist nur eine Datenbank 100 vorhanden. In der Datenbank 100 sind zumindest ein Teil der Daten gespeichert, die zuvor in Bezug auf die Datenbank 100 beschrieben sind. Zudem sind in der Datenbank 100 zumindest ein Teil der Daten gespeichert, die zuvor in Bezug auf die Datenbank 200 beschrieben sind.

Die Selbstkonfiguration mindestens einer der Behälterbehandlungslinien 1, 1A, 1B, insbesondere deren Behälterbehandlungseinrichtungen 3 bis 8 erfolgt auf dieselbe Weise, wie zuvor für das erste Ausführungsbeispiel beschrieben.

Zudem kann mindestens eine der Linien 1, 1A, 1B als Behälterbehandlungseinrichtung eine Waschmaschine für die Lebensmittelindustrie, insbesondere für die Getränkemittelindustrie, aufweisen. Hierbei hat die Waschmaschine / Behälterbehandlungseinrichtung eine Vielzahl von Modulen wenigstens zum Reinigen von Behältern. Die Behälter können beispielsweise aus Glas, refPET (PET = Polyethylen), "ref-Pulpe" sein.

Die Waschmaschine kann eine Bestimmungseinrichtung und/oder eine Steuereinheit sein oder umfassen, welche insbesondere wenigstens eine der folgenden Einstellungen automatisch vornimmt:

- ◦ Relevante Parameter/Module/Regelgrößen der Waschmaschine
- ◦ Auswahl Reinigungsparameter
- ◦ Kontrolle Versteinung
- ◦ Kontrolle Laugeverschleppung
- ◦ Messung Eindringtiefe Etikett (Ampermeter-Messung)
- ◦ eine Anmeldung und Synchronisierung einer Aggregatsteuerung mit einer Maschinenhauptsteuerung
- ◦ eine Synchronisierung innerhalb mindestens einer der Behälterbehandlungslinien 1, 1A, 1B.

Hierfür ist die Bestimmungseinrichtung der Waschmaschine ausgestaltet zum Empfangen von Eingabedaten, die insbesondere wenigstens einen Reinigungsparameter, Energie, Temperatur, und/oder sonstige Maschinen-relevante Parameter und/oder Steuerungsparameter/-prozesse aufweisen, wobei die Eingabedaten Parameter-Datensätze von bereits konfigurierten Maschinen und Operationsdaten umfassen.

Die Bestimmungseinrichtung der Waschmaschine und/oder die Abstimmeinrichtung 90 sind/ist ausgestaltet zum Erstellen von Konfigurationsparametern für die Waschmaschine mittels der Vergleichseinrichtung 12, die ein Künstliche-Intelligenz-Modul (KI- /AI-Modul) sein kann, wobei die Konfigurationsparameter auf wenigstens den empfangenen Eingabedaten basieren.

Zudem sind/ist die Bestimmungseinrichtung der Waschmaschine und/oder die Abstimmeinrichtung 90 ausgestaltet, die Konfigurationsparameter anzuwenden, um die Module der Waschmaschine zu konfigurieren, wobei die Module der Waschmaschine wenigstens zum Reinigen von Behältern 2 ausgelegt sind.

Dadurch ist es möglich, dass sich die Waschmaschine selbstkonfiguriert, beispielsweise auf der Grundlage von folgenden Daten:

A) Ein Kunde 1 hat einen Behälter, insbesondere Flasche, a und ein Etikett b sowie Klebstoff c im Einsatz. Dadurch hat sich das optimale Parameter-Set M ergeben, welches umfasst, dass ein Zusatz des speziellen KIC-Additivs x in 0,5% erfolgt, da ansonsten die Laugendurchdringung beim Etikett zu schlecht ist. Dadurch wäre das Reinigungsergebnis ungenügend.

B) Ein Kunde 2 hat eine neue Waschmaschine. Zudem kommt ein Etikett d zum Einsatz, das von vergleichbarer Spezifikation ist, allerdings 0,1 mm dicker ist. Deswegen wird die Additiv-Konzentration der Waschmaschine im Verhältnis auf 0,6% erhöht, da die Laugendurchdringung ansonsten voraussichtlich wieder ungenügend ist. Diese Anpassung ist möglich durch Datenbank/BigData-Abgleich, so dass bei der Waschmaschine eine Selbstkonfiguration abläuft.

Die Waschmaschine bei Kunde 2 hat nämlich gelernt, dass die Additiv-Konzentration noch weiter erhöht werden muss, nämlich auf 0,65%

C) Ein Kunde 3 hat den Vorteil diese Daten zu verwenden, da Kunde 3 ebenfalls ein Etikett analog Etikett d verwendet. Bei Kunde 3 wird die Additiv-Konzentration von vorne herein auf 0,65% erhöht.

Gemäß einem dritten Ausführungsbeispiel hat mindestens eine der Linien 1, 1A, 1B als Behälterbehandlungseinrichtung einen Pasteur für die Lebensmittelindustrie, insbesondere für die Getränkemittelindustrie. Hierbei hat der Pasteur eine Vielzahl von Modulen wenigstens zum Pasteurisieren/Behandeln/Thermischen Behandeln (Thermal Treatment) von Behältern 2, die Dosen umfassen oder gefertigt sind aus Glas oder Kunststoff, insbesondere PET, oder Pulpe oder mindestens einem sonstigen geeigneten Material.

Der Pasteur kann eine Bestimmungseinrichtung und/oder eine Steuereinheit sein oder umfassen, welche Angaben zu Temperaturprofilen/Pasteurisierungsprofilen, Verschmutzung/Versteinung des Pasteurs, mikrobiologischer Belastung, Desinfektionsprogrammen/-konzepten, Geschwindigkeit des Transporteurs, usw. verwenden. Der Pasteur, genauer dessen Bestimmungseinrichtung und/oder Steuereinheit, kann/können ausgestaltet sein, insbesondere wenigstens eine der folgenden Einstellungen automatisch vorzunehmen:

- ◦ Relevante Parameter/Module/Regelgrößen des Pasteurs
- ◦ Pasteurisierungsprofil, inklusive Temperaturprofil
- ◦ Desinfektionskonzept
- ◦ Mikrobiologische Belastung
- ◦ Versteinung
- ◦ eine Anmeldung und Synchronisierung einer Aggregatsteuerung mit einer Maschinenhauptsteuerung

◦ eine Synchronisierung innerhalb mindestens einer der Behälterbehandlungslinien 1, 1A, 1B.

Hierfür ist die Bestimmungseinrichtung des Pasteurs ausgestaltet zum Empfangen von Eingabedaten, die insbesondere wenigstens einen Pasteurisierungsprozess/-schritt und/oder Temperaturprofil, und/oder sonstige Maschinen-relevante Parameter und/oder Steuerungsparameter/-prozesse betreffen, wobei die Eingabedaten Parameter-Datensätze von bereits konfigurierten Maschinen und Betriebsdaten (Operationsdaten) umfassen.

Die Bestimmungseinrichtung des Pasteurs und/oder die Abstimmeinrichtung 90 sind/ist ausgestaltet zum Erstellen von Konfigurationsparametern für den Pasteur mittels der Vergleichseinrichtung 12, die ein Künstliche-Intelligenz-Modul (KI- /AI-Modul) sein kann, wobei die Konfigurationsparameter auf wenigstens den empfangenen Eingabedaten basieren.

Zudem sind/ist die Bestimmungseinrichtung des Pasteurs und/oder die Abstimmeinrichtung 90 ausgestaltet, die Konfigurationsparameter anzuwenden, um die Module des Pasteurs zu konfigurieren.

Dadurch ist es möglich, dass sich der Pasteur selbstkonfiguriert, beispielsweise auf der Grundlage von folgenden Daten:

A) Ein Kunde 1 hat ein Pasteurisierungs-Programm inkl. Temperaturprofil, Steinverhütung, Desinfektionskonzept/-konzentrationen, usw. Insbesondere kann es bei Kontrolle sämtlicher Spezifikationen [Behältermaterial, etc.] im Schnitt zu 0,4% Behälterplatzern kommen. Dies erfordert in der Regel eine Desinfektionskonzentration von 20 ppm.
B) Ein Kunde 2 hat eine neue Linie mit Pasteur, in der eine Flasche b verwendet wird, die sich bei der Spezifikation minimal von der Spezifikation bei Kunde A unterscheidet.
Aufgrund der bisherigen Datenbank-Werte führt diese Abweichung in der Regel zu 0,5% Behälterplatzern (total). Dadurch benötigt man 22 ppm des Desinfektionsmittels, was durch Datenbank/BigData-Abgleich herausgefunden wird. Der Pasteur ist also selbstkonfigurierend, da der Pasteur bei Kunde 2 gelernt hat, dass die 22 ppm nicht ausreichen, da im Schnitt 0,6% Behälterplatzer vorkommen. Der Pasteur konfiguriert sich also selbst auf 24 ppm.
C) Der Vorteil von Kunde 3 ist, dass er ebenfalls eine Flasche analog zu Flasche b verwendet. Daher konfiguriert sich dessen Pasteur von vorne herein auf eine Dosierung von 24 ppm an Desinfektionsmittel.

Die beschriebene Selbstkonfiguration des Pasteurs hat den großen Vorteil, dass keine mikrobiologische Belastung entsteht. Grund dafür ist, dass ohne die entsprechende Mindest-Desinfektion eine mikrobiologische Belastung entsteht, die unerwünschten Ausschuss und Anlagenstillstände produziert.

Gemäß einem vierten Ausführungsbeispiel hat mindestens eine der Linien 1. 1A, 1B eine CIP-Maschine. Das CIP-Maschine bietet schlüssige Reinigungsabläufe, die für den störungsfreien und mikrobiologisch einwandfreien Betrieb der zugehörigen Linie 1, 1A, 1B sorgen und dadurch auch die Produktqualität gewährleisten. Das Reinigungskonzept kann manuell oder automatisch erfolgen, wobei das Reinigungskonzept perfekt auf die zu reinigenden Anlagenteile der Behälterbahndlungseinrichtungen 3 bis 8 beziehungsweise auf die Anzahl der (Abfüll)Linien 1, 1A, 1B abgestimmt ist.

Der Einsatzbereich der CIP-Maschine liegt bei Reinigen von automatisch gesteuerten Füllern, (Kurzzeit-) Erhitzungsanlagen, Mixern, Sirupräumen sowie Rohrleitungssystemen und Tanks. Die CIP-Maschine hat eine völlig flexible Maschinenkonfiguration hinsichtlich der Größe und Anzahl der Tanks, von paralleler Reinigungsschienen und/oder der Dosage von Chemikalien.

Die CIP-Maschine bietet ein exzellentes Reinigungsergebnis durch Steuerung der Reinigungsprozesse nach Leitwert, Temperatur und Zeit. Hierbei ist ein Minimieren von Medienverlusten und Abwasser durch automatische Prozesse möglich. Dabei findet ein ermanenter Soll-/Ist-Wertvergleich und automatische Korrektur statt.

Insbesondere sind Rohrleitungen in Edelstahl Werkstoff AISI 316L und/oder
Tanks in Edelstahl Werkstoff AISI 304, optional AISI 316L gefertigt. Pumpen, Wärmetauscher und Schaltschrank können auf Rundrohrrahmen montiert sein. Hygienegerechte Ausführung der Armaturen, Pumpen, Sensoren, Verrohrungen und konstruktiven Trägerelementen ist vorteilhaft. Eine Temperatur- und Leitwertmessung im Rücklauf ist möglich.

Hierbei hat die CIP-Maschine eine Vielzahl von Modulen wenigstens zum Reinigen einer Linie 1, 1A, 1B zum Behandeln von Behältern 2, die Dosen umfassen oder gefertigt sind aus Glas oder Kunststoff, insbesondere PET, oder Pulpe oder mindesten einem sonstigen geeigneten Material.

Die CIP-Maschine kann eine Bestimmungseinrichtung und/oder eine Steuereinheit sein oder umfassen, welche Angaben zu produktionsrelevanten Behälterinformationen, Angaben zu Reinigungsprogrammen, eingesetzten Betriebsmitteln (Operating Supplies) / Rohstoffen, usw. verwenden. Die CIP-Maschine, genauer dessen Bestimmungseinrichtung und/oder Steuereinheit, kann/können ausgestaltet sein, insbesondere wenigstens eine der folgenden Einstellungen automatisch vorzunehmen:

◦ Relevante Parameter/Module/Regelgrößen der CIP-Maschine
◦ Angaben zu Reinigungsprogrammen
◦ Angaben zu eingesetzten Betriebsmitteln (Operating Supplies) / Rohstoffen

◦ Angaben zu Konzentrationen, Verweilzeiten, usw.
◦ eine Anmeldung und Synchronisierung einer Aggregatsteuerung mit einer Maschinenhauptsteuerung
◦ eine Synchronisierung innerhalb mindestens einer der Behälterbehandlungslinien 1, 1A, 1B.

Hierfür ist die Bestimmungseinrichtung der CIP-Maschine ausgestaltet zum Empfangen von Eingabedaten, die insbesondere wenigstens einen Reinigungsparamater und/oder Konzentrationsparameter, und/oder sonstige Maschinen-relevante Parameter und/oder Steuerungsparameter/-prozesse betreffen, wobei die Eingabedaten Parameter-Datensätze von bereits konfigurierten Maschinen und Betriebsdaten (Operationsdaten) umfassen.

Die Bestimmungseinrichtung der CIP-Maschine und/oder die Abstimmeinrichtung 90 sind/ist ausgestaltet zum Erstellen von Konfigurationsparametern für die CIP-Maschine mittels der Vergleichseinrichtung 12, die ein Künstliche-Intelligenz-Modul (KI- /AI-Modul) sein kann, wobei die Konfigurationsparameter auf wenigstens den empfangenen Eingabedaten basieren.

Zudem sind/ist die Bestimmungseinrichtung der CIP-Maschine und/oder die Abstimmeinrichtung 90 ausgestaltet, die Konfigurationsparameter anzuwenden, um die Module der CIP-Maschine zu konfigurieren.

Dadurch ist es möglich, dass sich die CIP-Maschine selbstkonfiguriert, beispielsweise auf der Grundlage von folgenden Daten:

A) Ein Kunde 1 füllt Bier in einen Behälter, insbesondere Flasche, a. Hierbei wurde ein CIP-Reinigungsprogramm y als optimales Parameter-Set M gewählt, bei dem ein Reinigungsbooster AD mit Konzentration x1% mit Kontaktzeit t1 verwendet wird.

B) Kunde 2 füllt ebenfalls Bier in einen Behälter, insbesondere Flasche, b. Aufgrund der Abweichungen zwischen den Behältern a, b wird ein Reinigungsbooster AD mit Konzentration x2% mit Kontaktzeit t2 gewählt. Die CIP-Maschine bei Kunde 2 hat gelernt, dass x2% mit Kontaktzeit t2 nicht reicht, sondern x3% und t3 eingestellt werden muss.

C) Der Vorteil von Kunde 3 ist, dass er ebenfalls eine Abfüllung analog zu Kunde 2 verwendet. Daher kann Kunde 3 Konzentration und Zeit analog zu Kunde 2 (x3% und t3) wählen. Daher konfiguriert sich dessen CIP-Maschine von vorne herein auf eine Einstellung wie bei Kunde 2.

Die beschriebene Selbstkonfiguration der CIP-Maschine hat den großen Vorteil, dass keine mikrobiologische Belastung entsteht. Grund dafür ist, dass ohne die entsprechende Mindest-Desinfektion eine mikrobiologische Belastung entsteht, die unerwünschten Ausschuss und Anlagenstillstände produziert.

Gemäß einem fünften Ausführungsbeispiel hat mindestens eine der Linien 1, 1A, 1B eine Recycling-Maschine für die Lebensmittelindustrie, insbesondere für die Getränkemittelindustrie. Hierbei hat die Recycling-Maschine eine Vielzahl von Modulen wenigstens zum Recyceln von Behältern 2, die Dosen umfassen oder gefertigt sind aus Glas oder Kunststoff, insbesondere PET, oder Pulpe oder mindesten einem sonstigen geeigneten Material.

Die Recycling-Maschine kann eine Bestimmungseinrichtung und/oder eine Steuereinheit sein oder umfassen, welche Angaben und/oder Operationsdaten verwendet, die wenigstens CAD-Daten/Scans zu produktionsrelevanten Behälterinformationen, Angaben zu Recyclingparametern, Angaben zum Entfärben ("Smart Decoloring"), Angaben zu benötigten Betriebsmitteln (Operating Supplies), wie Additien, Entschäumern, Entfärbereagenzien, Steinverhütungsmitteln, usw. umfassen. Die Recycling-Maschine, genauer dessen Bestimmungseinrichtung und/oder Steuereinheit, kann/können ausgestaltet sein, insbesondere wenigstens eine der folgenden Einstellungen automatisch vorzunehmen:

◦ Relevante Parameter/Module/Regelgrößen der Recycling-Maschine
◦ Angaben zu Recyclingparametern
◦ Angaben zu benötigten Betriebsmitteln (Operating Supplies), insbesondere zu Additien, Entschäumern, Entfärbereagenzien, Steinverhütungsmitteln, usw. inklusive Konzentrationen, Verweil-/Kontaktzeiten, usw.
◦ eine Anmeldung und Synchronisierung einer Aggregatsteuerung mit einer Maschinenhauptsteuerung
◦ eine Synchronisierung innerhalb mindestens einer der Behälterbehandlungslinien 1, 1A, 1B.

Hierfür ist die Bestimmungseinrichtung der Recycling-Maschine ausgestaltet zum Empfangen von Eingabedaten, die insbesondere wenigstens einen Recyclingparameter und/oder Angabe zu benötigten/eingesetzten Betriebsmitteln (Operating Supplies), wie Additien, Entschäumern, Entfärbereagenzien, Steinverhütungsmitteln, usw. und/oder sonstige Maschinen-relevante Parameter und/oder Steuerungsparameter/-prozesse betreffen, wobei die Eingabedaten Parameter-Datensätze von bereits konfigurierten Maschinen und Betriebsdaten (Operationsdaten) umfassen.

Die Bestimmungseinrichtung der Recycling-Maschine und/oder die Abstimmeinrichtung 90 sind/ist ausgestaltet zum Erstellen von Konfigurationsparametern für die Recycling-Maschine mittels der Vergleichseinrichtung 12, die ein Künstliche-Intelligenz-Modul (KI- /AI-Modul) sein kann, wobei die Konfigurationsparameter auf wenigstens den empfangenen Eingabedaten basieren.

Zudem sind/ist die Bestimmungseinrichtung der Recycling-Maschine und/oder die Abstimmeinrichtung 90 ausgestaltet, die Konfigurationsparameter anzuwenden, um die Module der Recycling-Maschine zu konfigurieren.

Dadurch ist es möglich, dass sich die Recycling-Maschine selbstkonfiguriert, beispielsweise auf der Grundlage von folgenden Daten:

A) Ein Kunde 1 recycelt PET-Kunststoff der Spezifikation a. Daraus ergibt sich das Betriebsmittel (OS) Set M sowie die Verfahrensparameter N.

B) Ein Kunde 2 recycelt ebenfalls PET-Kunststoff. Allerdings weicht sein Ausgangsmaterial zum Recyceln (Pool) etwas von der Spezifikation a ab, so dass bei Kunde 2 ein Spezifikation b vorliegt. Dadurch wird bei Kunde 2 das Betriebsmittel (OS) Set M auf das Betriebsmittel (OS) Set O angepasst.

Die Recycling-Maschine bei Kunde 2 lernt, dass die Parameter ebenfalls hinsichtlich P angepasst werden müssen.

C) Bei Kunde 3, dessen Spezifikation der Spezifikation b von Kunde 2 ähnelt, werden zum Recyceln direkt das Betriebsmittel (OS) Set O gewählt, das zudem angepasst ist hinsichtlich Parameter P. Es findet also ein Datenbank-Abgleich statt, wobei die Maschine von Kunde 3 selbstkonfigurierend ist.

Die beschriebene Selbstkonfiguration der Recycling-Maschine hat den großen Vorteil, dass unerwünschter Ausschuss und Anlagenstillstände minimierbar sind.

Gemäß einem sechsten Ausführungsbeispiel hat mindestens eine der Linien 1, 1A, 1B eine Smart-Link-Maschine für die Lebensmittelindustrie, insbesondere für die Getränkemittelindustrie. Hierbei erstellt die Smart-Link-Maschine eine Verknüpfung zwischen einer Vorfomling-Herstellmaschine und einer Blasmaschine. Die Vorfomling-Herstellmaschine), kann insbesondere eine Spritzgussmaschine oder eine Formpressmaschine (Compression Moulding Machine) sein.

Die Smart-Link-Maschine kann eine Bestimmungseinrichtung und/oder eine Steuereinheit sein oder umfassen, welche eine Vielzahl von Modulen wenigstens zum Erzeugen und/oder Streckblasen von Behältern (i.d.R. PET - künftig eventuell auch Pulpe) [, usw. umfasst. Die Smart-Link-Maschine, genauer deren Bestimmungseinrichtung und/oder Steuereinheit, kann/können ausgestaltet sein, insbesondere wenigstens eine der folgenden Einstellungen automatisch vorzunehmen:

○ Relevante Parameter/Module/Regelgrößen der Smart-Link-Maschine
○ Auswahl der Streckblasparameter
○ Ofen-Leistung
○

## Kontrolle der Verschmutzung + angepasste Reinigung

o eine Anmeldung und Synchronisierung einer Aggregatsteuerung mit einer Maschinenhauptsteuerung
o eine Synchronisierung innerhalb mindestens einer der Behälterbehandlungslinien 1, 1A, 1B.

Hierfür ist die Bestimmungseinrichtung der Smart-Link-Maschine ausgestaltet zum Empfangen von Eingabedaten, die insbesondere wenigstens einen Streckblasprozess und/oder Umformungsprozess/Härteprozesses, usw. und/oder sonstige Maschinen-relevante Parameter und/oder Steuerungsparameter/-prozesse betreffen, wobei die Eingabedaten Parameter-Datensätze von bereits konfigurierten Maschinen und Betriebsdaten (Operationsdaten) umfassen.

Die Bestimmungseinrichtung der Recycling-Maschine und/oder die Abstimmeinrichtung 90 sind/ist ausgestaltet zum Erstellen von Konfigurationsparametern für die Smart-Link-Maschine mittels der Vergleichseinrichtung 12, die ein Künstliche-Intelligenz-Modul (KI- /AI-Modul) sein kann, wobei die Konfigurationsparameter auf wenigstens den empfangenen Eingabedaten basieren.

Zudem sind/ist die Bestimmungseinrichtung der Smart-Link-Maschine und/oder die Abstimmeinrichtung 90 ausgestaltet, die Konfigurationsparameter anzuwenden, um die Module der Smart-Link-Maschine zu konfigurieren.

Dadurch ist es möglich, dass sich die Smart-Link-Maschine selbstkonfiguriert, beispielsweise auf der Grundlage von folgenden Daten:

A) Ein Kunde 1 hat einen Behälter, insbesondere Flasche, a und Vorformling (Preform) x im Einsatz. Dadurch hat sich das optimale Parameter-Set M ergeben, bei dem eine Temperatur z.B. 72 Grad ist, und ein Streckblasprozess verwendet wird.

B) Ein Kunde 2 hat eine neue Linie 1, die in Betrieb zu nehmen ist. Hier ist ein Vorformling (Preform) y ist an einer relevanten Stelle um 0,1 mm dicker, weswegen die Temperatur von 72 Grad auf 73 Grad erhöht wird, da der Streckprozess hier mehr Temperatur erfordert. Eine derartige Anpassung ist durch Datenbank/BigData-Abgleich möglich. Die Linie 1 von Kunde 2 arbeitet also selbstkonfigurierend.

Die Smart-Link-Maschine bei Kunde 2 hat gelernt, dass die 73 Grad nicht ausreichen, sondern 74 Grad benötigt werden.

C) Ein Kunde 3 hat den Vorteil, dass er ebenfalls einen Vorformling (Preform) analog zu Preform y des Kunden 2 verwendet. Daher erhöht die Smart-Link-Maschine bei Kunde 3 die Temperatur automatisch um 2 Grad (von 72 auf 74).

Die beschriebene Selbstkonfiguration der Smart-Link-Maschine hat den großen Vorteil, dass unerwünschter Ausschuss und Anlagenstillstände minimierbar sind.

Gemäß einem siebenten Ausführungsbeispiel umfasst mindestens eine der Datenbanken 100, 200 External Big Data. Hierfür sind in einer weltweiten Datenbank Zusammenhänge zwischen Fehlern und Ursachen von anderen baugleichen / ähnlichen Maschinen abgespeichert. Dabei kann es sich beispielsweise um Zusammenhänge zwischen Maschinen sowie Prozessparametern, Verfahrens- sowie applikationsspezifischen Parametern, Umgebungsbedingungen handeln. Zusammenhänge zwischen Maschinen sowie Prozessparametern sind z.B. eine Blaskurve. Verfahrens- sowie applikationsspezifische Parameter sind z.B. die Art der Reinigung in Kombination mit Wasserqualität sowie Wasservorbehandlung. Umgebungsbedingungen sind z.B. eine mangelnde Kontrolle der relevanten Umgebungsparameter; Einfluss von einer unsachgemäßen Lagerhaltung.

Zusätzlich kann mindestens eine der Datenbanken 100, 200 Internal Big Data umfassen. Hierfür sind in einer weltweiten Datenbank Wissen (KnowHow) des Herstellers der Linien 1, 1A, 1B abgespeichert. Dabei kann es sich beispielsweise um Stücklisten und Serienstände handeln. Beispielsweise kann abgespeichert sein, dass eine Lieferantenumstellung in 2017 stattgefunden hat. Tritt somit ein Fehler bei Maschinen von vor 2017 auf, so muss der Fehler an dem Bauteil liegen, welches vor 2017 verbaut wurde. Es handelt sich also um Wissen (KnowHow) des Herstellers, welches nur durch Internal Big Data zu Handlungsempfehlung führen kann. External Big Data hätte keine Handlungsempfehlung ausgeben können.

Mindestens eine der Bestimmungseinrichtungen der Linien 1, 1A, 1B und/oder die Abstimmeinrichtung 90 sind/ist ausgestaltet mindestens eine Handlungsempfehlung auszugeben bei einer Abweichung von der Masse. Ein Beispiel hierfür ist, dass ein CoA Preform innerhalb der Spezifikation liegt, wobei jedoch ein Analyseparameter gegenüber dem weltweiten Datensatz nach oben abweicht, was eine potenzielle Fehlerquelle ist.

Mindestens eine der Bestimmungseinrichtungen der Linien 1, 1A, 1B und/oder die Abstimmeinrichtung 90 sind/ist ausgestaltet mindestens eine Handlungsempfehlung auszugeben bei einer Übereinstimmung zwischen einer eigenen Abweichung bzw. eigenem Fehler mit einer Abweichung bzw. Fehler bei einer anderen Maschine.

Für die Überwachung eines Kühlkreislaufs kann gemäß dem vorliegenden Ausführungsbeispiel folgendermaßen vorgegangen werden. Über Sensoren werden Parameter gemessen, welche für Kühlwasser charakteristisch sind, insbesondere dass die Kühlwasserqualität aufgrund von Ablagerungen nicht mehr passt. Ein Vergleich mit External Big Data ergibt, dass andere Kunde (-n) mit baugleicher ähnlicher Maschine dasselbe Problem aufgrund von falsch abgestimmten Desinfektion-/Härtestabilisierungskonzept haben, wobei die Lösung dieses Problems ein neues Desinfektion- /Härtestabilisierungskonzept war. Bei Vergleich mit Internal Big Data ergibt sind, dass ein interner Vermerk bei der Auslegung vorhanden ist. Demzufolge wurde der Kunde darauf hingewiesen, dass eine fehlende Trennung von Pasteur und Kühlturm zu Problemen bei der Prozesswasserqualität führen kann. Trotzdem wurde eine Sondermaschine entsprechend dem Kundenwunsch gebaut. Diese Information wäre aus External Big Data nicht ersichtlich, ist hier aber die Lösung.

Für die Überwachung eines Filters kann gemäß dem vorliegenden Ausführungsbeispiel folgendermaßen vorgegangen werden. Über Sensoren werden Parameter gemessen, welche für Filter charakteristisch sind, insbesondere dass ein Druckluftfilter zugesetzt ist. Ein Vergleich mit External Big Data ergibt, dass andere Kunde (-n) mit baugleicher ähnlicher Maschine dasselbe Problem an Position X haben. Jedoch ist keine klare Handlungsempfehlung möglich. Bei Vergleich mit Internal Big Data ergibt sind, dass Eine Lieferanteumstellung in 2017 stattgefunden hat, da sich Fehler bei Maschinen älter 2017 ergaben. Somit ergibt sich, dass der Fehler an altem Filter lag. Dies ist Wissen (Know How), welches nur durch Internal Big Data zu Handlungsempfehlung führen kann. Das Wissen wäre nicht durch laufenden Betrieb ersichtlich. Daraus ergibt sich: Fehler tritt nur bei Maschinen vor 2017 auf. Die Konsequenz daraus ist, dass dieser spezifische Filter die Fehlerquelle ist. Daher erfolgen Handlungsempfehlungen durch eine Information an Kunde mit Fehler und durch eine Information an Kunde mit altem Filter.

Gemäß dem siebenten Ausführungsbeispiel werden Parameter, welche für den Zustand in einer der Linien 1, 1A, 1B relevant sind, mit External/Internal Big Data verglichen und zudem werden Handlungsempfehlungen ausgegeben, um den Zustand zu ändern oder welche den Zustand betreffen.

Mögliche Daten, die ermittelt werden und mit External/Internal Big Data verglichen werden sind Daten zum Energieverbrauch, Medienverbrauch, Verbrauchsgüter/Betriebsstoffe (Schmierstoffe, Reinigungsmittel), Ersatzteile, Elektronisches Typenschild.

Das sechste Ausführungsbeispiel hat den Vorteil, dass Handlungsempfehlungen frühzeitig ausgegeben werden können.

Alle zuvor beschriebenen Ausgestaltungen der Behälterbehandlungslinie 1 und des zuvor beschriebenen Verfahrens können einzeln oder in allen möglichen Kombinationen Verwendung finden. Die Merkmale von mindestens zwei Ausführungsbeispielen des ersten bis siebenten Ausführungsbeispiels sind beliebig miteinander kombinierbar. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Anzahl der Behandlungselemente der Behälterbehandlungseinrichtungen 3, 4, 5, 6, 7, 8 ist beliebig wählbar.

Die Anzahl der Heizelemente 411 des Heizmoduls 41 ist je nach Bedarf wählbar. Dasselbe gilt jeweils entsprechend für die Anzahl der Heizelemente 421, 432, 442 der Heizmodule 42, 43, 44. Es können in mindestens einem der Heizmodule 41 bis 44 insbesondere mehr oder weniger als in den Figuren gezeigte Heizelemente 411 Verwendung finden.

Außerdem ist die Anzahl der Heizmodule 411 bis 414 je nach Bedarf wählbar. Es können mehr oder weniger als in den Figuren gezeigte Heizmodule 411 bis 414 Verwendung finden.

Zudem ist die Anzahl der Blasformen 61 beliebig wählbar. Zusätzlich oder alternativ ist die Anordnung der Blasformen 61 in der Blasmaschine 6 beliebig wählbar.

Die Transporteinrichtung 5, die der Füllmaschine 7 nachgeordnet ist, kann zumindest abschnittsweise ein Massentransporteur sein, bei welchem die Behälter 2 nebeneinander in Richtung der Ausstattungsmaschine 8 transportiert werden. Die Transporteinrichtung 5, die der Ausstattungsmaschine 8 nachgeordnet ist, kann zumindest abschnittsweise ein Massentransporteur sein.

Zudem ist die Anzahl und/oder Zusammenstellung der zuvor genannten Maschinen je nach Bedarf bzw. Linie 1, 1A, 1B wählbar.

Bezugszeichenliste

| 1, 1A, 1B | Behälterbehandlungslinie |
|---|---|
| 2 | Behälter |
| 2A | Vorformling |
| 3 | Behälterbehandlungseinrichtung (Transporteinrichtung) |
| 4 | Behälterbehandlungseinrichtung (Heizeinrichtung) |
| 5 | Behälterbehandlungseinrichtung (Transporteinrichtung) |
| 6 | Behälterbehandlungseinrichtung (Blasmaschine) |
| 7 | Behälterbehandlungseinrichtung (Füllmaschine) |
| 8 | Behälterbehandlungseinrichtung (Ausstattungsmaschine) |
| 10 | Steuergerät |
| 11 | Vergleichseinrichtung |
| 12 | Abgleicheinrichtung |
| 31 | Greifer |
| 35 | Bestimmungseinrichtung (Sensor) |
| 41 bis 44 | erstes bis viertes Behandlungsmodul (Heizmodul) |
| 45 | Bestimmungseinrichtung (Sensor) |
| 411 | erstes Behandlungselement (Heizstrahler, Reflektor) |
| 421 | zweites Behandlungselement (Heizstrahler, Reflektor) |
| 431 | drittes Behandlungselement (Heizstrahler, Reflektor) |
| 441 | viertes Behandlungselement (Heizstrahler, Reflektor) |
| 51 | erstes Behandlungselement (Geländer) |
| 52 | zweites Behandlungselement (Geländer) |
| 53 | drittes Behandlungselement (Aufnahmeelement) |
| 54 | viertes Behandlungselement (Antrieb) |
| 55 | Bestimmungseinrichtung (Sensor) |
| 61 | erstes Behandlungselement (Blasform) |
| 62 | zweites Behandlungselement (Drehstern) |
| 65 | Bestimmungseinrichtung (Sensor) |
| 71 | Behandlungselement (Füllbehälter) |
| 72 | Behandlungselement (Kühlmedium) |
| 73 | Füllmedium |

| 74 | Behandlungselement (Füller) |
|---|---|
| 75 | Bestimmungseinrichtung (Sensor) |
| 81 | erstes Behandlungselement (Ausstattungsaggregat) |
| 82 | zweites Behandlungselement (Ausstattungsaggregat) |
| 83 | drittes Behandlungselement (Ausstattungsmedium) |
| 85 | Bestimmungseinrichtung |
| 90 | Abstimmeinrichtung |
| 95 | Bestimmungseinrichtung (Sensor, Datenauswerteeinheit, Kamera) |
| 97 | Anzeigeeinrichtung |
| 100 | erste Datenbank |
| 101, 102, 103 | Daten, vorbestimmter Zustand |
| 10N | Daten, vorbestimmter Zustand |
| 10M | Daten, vorbestimmter Zustand |
| 200 | zweite Datenbank |
| TR1 | erste Transportrichtung |
| TR2 | zweite Transportrichtung |

**Patentansprüche**

1.  Behälterbehandlungslinie (1), mit

    mindestens zwei Behälterbehandlungseinrichtungen (3 ...8), die mindestens eine erste Behälterbehandlungseinrichtung (4) zur Behandlung von Behältern (2; 2A) und eine zweite Behälterbehandlungseinrichtung (6) zur
    Behandlung der Behälter (2; 2A) aufweisen, und die ausgestaltet sind, miteinander Daten (101; 102; 103) in
    Bezug auf die Behandlung der Behälter (2; 2A) auszutauschen,
    mindestens einer Bestimmungseinrichtung (35; 45; 55; 65; 75; 85) zum Bestimmen eines Ist-Zustands mindestens eines vorbestimmten Elements (31; 411; 51; 61; 74; 81), das für ein Behandeln der Behälter (2; 2A) mit
    mindestens einer der mindestens zwei Behälterbehandlungseinrichtungen (3 ...8) vorgesehen ist,
    einer Vergleichseinrichtung (11) zum Vergleich des von der Bestimmungseinrichtung (35; 45; 55; 65; 75; 85)
    bestimmten Ist-Zustands mit einem in einer ersten Datenbank (100) gespeicherten vorbestimmten Zustand
    (101), der ein Mess- und/oder Regelzustand in Bezug auf den Betrieb einer externen Behälterbehandlungslinie
    (1A) ist, welche mindestens eine Behälterbehandlungseinrichtung (4; 6) aufweist, die zumindest teilweise
    baugleich zu einer der mindestens zwei Behälterbehandlungseinrichtungen (3 ...8) ist, und
    einer Abstimmeinrichtung (90) zur Abstimmung mindestens einer Einstellung zur Behandlung der Behälter (2;
    2A), die in der ersten Behälterbehandlungseinrichtung (3) vorzunehmen ist, mit mindestens einer Einstellung zur
    Behandlung der Behälter (2; 2A), die mit der zweiten Behälterbehandlungseinrichtung (4) vorzunehmen ist,
    wobei die Abstimmeinrichtung (90) ausgestaltet ist, ihre Abstimmung auf der Grundlage des Vergleichsergebnisses der Vergleichseinrichtung (11) auszuführen.

2.  Behälterbehandlungslinie (1) nach Anspruch 1, wobei die Abstimmeinrichtung (90) bei ihrer Abstimmung mindestens
    eine Konfiguration der ersten Behälterbehandlungseinrichtung (4) und/oder der zweiten Behälterbehandlungseinrichtung (6) ausführt, um die Behälterbehandlungslinie (1) zur Behandlung der Behälter (2; 2A) einzustellen.

3.  Behälterbehandlungslinie (1) nach Anspruch 1 oder 2, wobei die Abstimmeinrichtung (90) auf der Grundlage des
    Vergleichsergebnisses der Vergleichseinrichtung (11) und/oder des Abgleichergebnisses einer Abgleicheinrichtung
    (12) zur Selbstkonfiguration der mindestens zwei Behälterbehandlungseinrichtungen (3 ...8) ausgestaltet ist.

4.  Behälterbehandlungslinie (1) nach einem der vorangehenden Ansprüche, wobei der erste vorbestimmte Zustand
    eine Anomalie und/oder Fehler ist, die und/oder der im Betrieb der externen Behälterbehandlungslinie (1A; 1B)
    aufgetreten ist.

5.  Behälterbehandlungslinie (1) nach einem der vorangehenden Ansprüche, wobei der erste vorbestimmte Zustand ein
    Einbauzustand und/oder Einrichtzustand ist, der bei der Inbetriebnahme der externen Behälterbehandlungslinie (1A;
    1B) aufgetreten ist.

6.  Behälterbehandlungslinie (1) nach einem der vorangehenden Ansprüche, wobei der erste vorbestimmte Zustand
    eine Konfiguration ist, die zum Betrieb der externen Behälterbehandlungslinie (1A; 1B) vorgenommen wurde.

7. Behälterbehandlungslinie (1) nach einem der vorangehenden Ansprüche, wobei die Bestimmungseinrichtung (35; 45; 55; 65; 75; 85) mindestens ein Sensor und/oder mindestens eine Datenauswerteeinheit zum Bestimmen des Ist-Zustands des mindestens einen vorbestimmten Elements (31; 411; 51; 61; 74; 81) ist.

8. Behälterbehandlungslinie (1) nach einem der vorangehenden Ansprüche, wobei die mindestens eine Baueigenschaft des vorbestimmten Elements (31; 411; 51; 61; 74; 81) der Bauzeitpunkt oder Baujahr des vorbestimmten Elements (31; 411; 51; 61; 74; 81) und/oder der mindestens zwei Behälterbehandlungseinrichtungen (3 ...8) ist.

9. Behälterbehandlungslinie (1) nach einem der vorangehenden Ansprüche,

   wobei der in der ersten Datenbank (100) gespeicherte vorbestimmte Zustand ein als Fehler eingestufter Zustand des vorbestimmten Elements (31; 411; 51; 61; 74; 81) ist, und
   wobei die Abstimmeinrichtung (90) ausgestaltet ist, eine Handlungsempfehlung zu erzeugen und auszugeben, die auf der Grundlage des Vergleichsergebnisses der Vergleichseinrichtung (11) basiert.

10. Behälterbehandlungslinie (1) nach einem der vorangehenden Ansprüche, zudem mit einer Anzeigeeinrichtung (97) zur Anzeige mindestens einer Ausgabe der Bestimmungseinrichtung (35; 45; 55; 65; 75; 85) und/oder der Vergleichseinrichtung (11) und/oder der Abstimmeinrichtung (90).

11. Behälterbehandlungslinie (1) nach einem der vorangehenden Ansprüche, zudem mit einer Kopplungseinrichtung zur Kopplung der Behandlung der Behälter (2; 2A) mit der ersten Behälterbehandlungseinrichtung (4) und der Behandlung der Behälter (2; 2A) mit der zweiten Behälterbehandlungseinrichtung (6) auf der Grundlage von Daten (101 ... 10N), die in der ersten Datenbank (100) gespeichert sind.

12. Behälterbehandlungslinie (1) nach Anspruch 11, wobei die Kopplungseinrichtung ausgestaltet ist, mindestens einen Parameter zur Behandlung von Behältern (2; 2A), der in der zweiten Behälterbehandlungseinrichtung (6) bei der Behandlung der Behälter (2; 2A) zu verwenden ist, an mindestens einen Parameter zur Behandlung von Behältern (2; 2A) anzupassen, der in der ersten Behälterbehandlungseinrichtung (4) bei der Behandlung der Behälter (2; 2A) eingestellt ist.

13. Behälterbehandlungslinie (1) nach einem der vorangehenden Ansprüche, wobei die Bestimmungseinrichtung (35; 45; 55; 65; 75; 85) ausgestaltet ist, als den Ist-Zustand des mindestens einen vorbestimmten Elements (31; 411; 51; 61; 74; 81) eine Einstellung des vorbestimmten Elements (31; 411; 51; 61; 74; 81) der ersten Behälterbehandlungseinrichtung (4) oder der zweiten Behälterbehandlungseinrichtung (6) zu bestimmen.

14. Behälterbehandlungslinie (1) nach Anspruch 13, wobei die Einstellung des vorbestimmten Elements (31; 411; 51; 61; 74; 81) der ersten Behälterbehandlungseinrichtung (4) oder der zweiten Behälterbehandlungseinrichtung (6) mindestens eine der folgenden Einstellungen umfasst, nämlich eine Montagehöhe des vorbestimmten Elements (31; 411; 51; 61; 74; 81), eine Zusammensetzung eines flüssigen oder gasförmigen Mediums, eine Temperatur eines Elements (31; 411; 51; 61; 74; 81) oder eines flüssigen oder gasförmigen Mediums, eine Belichtungszeit, ein Drehmoment des vorbestimmten Elements (31; 411; 51; 61; 74; 81).

15. Behälterbehandlungslinie (1) nach einem der vorangehenden Ansprüche, wobei die mindestens zwei Behälterbehandlungseinrichtungen mindestens eine Blasmaschine (6) aufweisen, die zum Blasformen der Behälter (2) aus jeweils einem Vorformling (2A) ausgestaltet ist.

16. Behälterbehandlungsvorrichtung (1) nach einem der vorangehenden Ansprüche, zudem mit mindestens einem Heizelement (411) zur Abstrahlung von Heizstrahlung zum Heizen von Vorformlingen (2A)

17. Behälterbehandlungslinie (1) nach einem der vorangehenden Ansprüche, wobei die mindestens zwei Behälterbehandlungseinrichtungen (3 ...8) mindestens eine Transporteinrichtung (3; 5) zum Transport der Behälter (2; 2A) in der Behälterbehandlungslinie (1) aufweisen.

18. Behälterbehandlungslinie (1) nach Anspruch 17, wobei die mindestens eine Transporteinrichtung (3; 5) zum Transport der Behälter (2; 2A) relativ zu mindestens einer der ersten Behälterbehandlungseinrichtung (4) und/oder der zweiten Behälterbehandlungseinrichtung (6) ausgestaltet ist.

19. Behälterbehandlungsverfahren zum Behandeln von Behältern in einer Behälterbehandlungslinie (1), die mindestens zwei Behälterbehandlungseinrichtungen (3 ...8) aufweist, die mindestens eine erste Behälterbehandlungseinrichtung (4) zur Behandlung von Behältern (2; 2A) und eine zweite Behälterbehandlungseinrichtung (6) zur Behandlung der Behälter (2; 2A) aufweisen, und die ausgestaltet sind, miteinander Daten (101; 102; 103) in Bezug auf die Behandlung der Behälter (2; 2A) auszutauschen, wobei das Verfahren die folgenden Schritte aufweist

Bestimmen, mit mindestens einer Bestimmungseinrichtung (35; 45; 55; 65; 75; 85), eines Ist-Zustands mindestens eines vorbestimmten Elements (31; 411; 51; 61; 74; 81), das für ein Behandeln der Behälter (2; 2A) mit mindestens einer der mindestens zwei Behälterbehandlungseinrichtungen (3 ...8) vorgesehen ist,
Vergleichen, mit einer Vergleichseinrichtung (11), des von der Bestimmungseinrichtung (35; 45; 55; 65; 75; 85) bestimmten Ist-Zustands mit einem in einer ersten Datenbank (100) gespeicherten vorbestimmten Zustand (101), der ein Mess- und/oder Regelzustand in Bezug auf den Betrieb einer externen Behälterbehandlungslinie (1A) ist, welche mindestens eine Behälterbehandlungseinrichtung (4; 6) aufweist, die zumindest teilweise baugleich zu einer der mindestens zwei Behälterbehandlungseinrichtungen (3 ...8) ist, und
Abstimmen, mit einer Abstimmeinrichtung (90), mindestens einer Einstellung zur Behandlung der Behälter (2; 2A), die in der ersten Behälterbehandlungseinrichtung (3) vorzunehmen ist, mit mindestens einer Einstellung zur Behandlung der Behälter (2; 2A), die mit der zweiten Behälterbehandlungseinrichtung (4) vorzunehmen ist, wobei die Abstimmeinrichtung (90) ihre Abstimmung auf der Grundlage des Vergleichsergebnisses der Vergleichseinrichtung (11) ausführt.

# FIG. 1

# FIG. 2

# EP 4 769 043 A1

Europäisches Patentamt
European Patent Office
Office européen des brevets

## EUROPÄISCHER RECHERCHENBERICHT

Nummer der Anmeldung

EP 25 21 2138

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 114947 A1 (KRONES AG [DE]) 9. März 2017 (2017-03-09) * Absatz [0003] - Absatz [0056] * ----- | 1-19 | INV. G05B19/418 B65B57/20 B67C3/00 |
| X | DE 10 2009 040977 A1 (KRONES AG [DE]) 17. März 2011 (2011-03-17) * Absatz [0030] - Absatz [0068] * ----- | 1-19 | |
| X | DE 10 2016 103117 A1 (KRONES AG [DE]) 24. August 2017 (2017-08-24) * Absatz [0005] - Absatz [0052] * ----- | 1-19 | |

RECHERCHIERTE SACHGEBIETE (IPC)

G05B
B65B
B67C

Der vorliegende Recherchenbericht wurde für alle Patentansprüche erstellt

| Recherchenort | Abschlußdatum der Recherche | Prüfer |
|---|---|---|
| Den Haag | 26. März 2026 | Patsiopoulos, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 25 21 2138

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-03-2026

| Im Recherchenbericht angeführtes Patentdokument | Datum der Veröffentlichung | Mitglied(er) der Patentfamilie | Datum der Veröffentlichung |
|---|---|---|---|
| DE 102015114947 A1 | 09-03-2017 | CN      108292129 A | 17-07-2018 |
|  |  | DE 102015114947 A1 | 09-03-2017 |
|  |  | EP      3347778 A1 | 18-07-2018 |
|  |  | US    2019025796 A1 | 24-01-2019 |
|  |  | WO    2017042234 A1 | 16-03-2017 |
| DE 102009040977 A1 | 17-03-2011 | CN      102030119 A | 27-04-2011 |
|  |  | CN      103496481 A | 08-01-2014 |
|  |  | DE 102009040977 A1 | 17-03-2011 |
|  |  | EP      2295226 A1 | 16-03-2011 |
|  |  | US    2011061347 A1 | 17-03-2011 |
|  |  | US    2013309343 A1 | 21-11-2013 |
| DE 102016103117 A1 | 24-08-2017 | CN      108780300 A | 09-11-2018 |
|  |  | DE 102016103117 A1 | 24-08-2017 |
|  |  | EP      3420418 A1 | 02-01-2019 |
|  |  | US    2019022915 A1 | 24-01-2019 |
|  |  | WO    2017144145 A1 | 31-08-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 352633 B1

- WO 2022238032 A1